# EUROPEAN PATENT SPECIFICATION

(11) **EP 1 844 103 B1**
(45) Date of publication and mention of the grant of the patent: **24.06.2009**
(21) Application number: 05854941.1
(22) Date of filing: 21.12.2005
(51) Int. Cl.: C08L 67/00, C08K 3/34

(54) **TOUGHENED POLYESTER COMPOSITIONS**
SCHLAGZÄH MODIFIZIERTE POLYESTERZUSAMMENSETZUNGEN
COMPOSITIONS DE POLYESTER RENFORCEES

(30) Priority: 22.12.2004 US 638225 P; 02.06.2005 US 686847 P; 02.06.2005 US 686708 P; 02.06.2005 US 686728 P; 02.06.2005 US 686689 P; 02.06.2005 US 686707 P; 02.06.2005 US 686675 P
(43) Date of publication of application: 17.10.2007
(73) Proprietor: E.I. DU PONT DE NEMOURS AND COMPANY, Wilmington, DE 19898 (US)
(72) Inventor: ALMS, Gregory, R., Hockessin, Delaware 19707 (US); WILLIAMSON, David, T., Katy, Texas 77494 (US); POTTIGER, Michael, T., Media, Pennsylvania 19063 (US); ENGLISH, Alan, D., Chadds Ford, Pennsylvania 19317 (US); SCHLEINITZ, Henry, Max, Wilmington, Delaware 19806 (US)
(74) Representative: Heinemann, Monica
(86) International application number: PCT/US2005/046304
(87) International publication number: WO 2006/086080

(56) References cited:
- EP-A- 0 292 251
- WO-A-20/04104099

## Description

### FIELD OF THE INVENTION

A polyester composition comprising specified amounts of certain reinforcing agents, sepiolite-type clay, and a toughening agent is useful for making parts requiring a smooth surface, for instance, for automotive body panels and appliance parts such as handles and housings. The sepiolite-type clay is added to the polyester forming ingredients before or during the polymerization.

### TECHNICAL BACKGROUND

One of the challenges in replacing metal parts with plastics is producing plastic parts with good looking (smooth) surfaces, and/or whose surfaces can be coated (painted) to have a glossy smooth appearance. This, often coupled with the need for certain minimum levels of toughness and/or heat resistance, has presented a challenge, especially in using polymers and other ingredients that are relatively inexpensive. Thermoplastics of various types have been tried in such applications, and have been successfully used in some instances, and have the advantage of being reusable (for example scrap) and often are tougher than thermoset polymers. However in uses where high resistance to two or more environmental stresses are needed, improved compositions are still needed.

For instance, a particularly challenging type of part is an automotive body panel, such as fenders, hoods, doors, lift-up tailgates, trunk lids, tank caps, bumpers, protective moldings, side panels, body sills, mirror housings, handles, spoilers, gas tank flap covers, and hub caps. These parts must be precisely molded to close dimensional tolerances so they will fit properly on the automobile, they must be tough enough to resist mechanical/impact damage, and they must have a very smooth surface so (usually) when they are painted they have a good surface appearance (sometimes called a "Class A" surface). In addition it is preferred that they have enough heat resistance so that they can withstand the temperatures (sometimes as high as 200°C, and for as long as 30 minutes) in an automotive paint bake oven without excessively sagging, warping, or otherwise deforming. While these parts can be painted separately at lower temperatures and then later attached to the body after painting (so called off line painting) such a process adds significant cost to the vehicle assembly process, and it is preferred from an economic standpoint to paint these parts on the regular paint line. Color matching of parts painted in two different processes may be difficult. These parts also need to have a minimum level of stiffness and fatigue resistance to stresses that are repeatedly encountered in normal use.

Other appearance parts may not require this extreme temperature resistance, but often require the other attributes mentioned above.

More particularly for automotive vehicles [passenger cars, trucks, snowmobiles, construction vehicle, farm equipment vehicle (such as a tractor or combine), etc.] external appearance, for example with respect to color tone, gloss and/or short-wave and long-wave structure, the surfaces of the coated plastic parts for the observer should not differ, or should differ only slightly from the coated metal surfaces of a car body. This applies, in particular, to plastic parts, such as fenders, bonnets, boot lids, doors or body sills which are constructed with as small a joint width as possible to and in particular also in the same plane as adjacent metal parts, since visual differences are particularly striking there.

There are three different approaches to the production of coated car bodies assembled from metal and plastic parts in a mixed construction:
1. The method known as the off-line process, in which the metal car body and the plastic parts are coated separately and then assembled.
   The drawback of the off-line process is its susceptibility to lack of visual harmonization of the coated metal and plastic surfaces, at least in cases where coated plastic parts and coated metal parts are subjected to direct visual comparison for reasons of construction, for example, owing to the virtually seamless proximity of the coated parts and/or arrangement of the coated parts in one plane.
   A further drawback is the necessity of operating two coating lines.
2. The method known as the in-line process in which the metal body already provided with an electrodeposition coating as a primer and the uncoated plastic parts or the plastic parts optionally only provided with a plastic primer are assembled and provided with one or more further coating layers in a subsequent common coating process.
   The drawback of the in-line process is the assembly step inserted into the coating process as an interruptive intermediate step which also involves the risk of introducing dirt into the further coating process.
3. The method known as the on-line process, in which the uncoated body parts made of metal and the uncoated plastic parts or the plastic parts optionally only provided with a plastic primer are assembled into a body constructed in a mixed construction and then passed through a common coating process including electrodeposition coating, wherein naturally only the electrically conductive metal parts are provided with an electrodeposition coating, while all the coating layers to be applied subsequently are applied both to the electrodeposition coated metal parts and to the plastic parts.

The on-line process is particularly preferred as it clearly separates the body base shell construction and the coating process and allows an undisturbed coating sequence.

Basically only adequately heat-resistant and simultaneously heat deformation-resistant plastics materials are suitable for the particularly preferred on-line process, since high temperatures are used in the drying of the electrodeposition coating.

Plastic parts made of previously available fiber-reinforced thermoplastics, for example, are at best conditionally suitable, since the coated surfaces do not have an adequate high visual harmonization with the coated metal surfaces and, in particular, are not up to the high standards required by car manufacturers.

Polymer-layered silicate nanocomposites incorporate a layered clay mineral filler in a polymer matrix. In other words these are compositions in which nanosized particles are dispersed in a polymeric matrix. Layered silicates are made up of several hundred thin platelet layers stacked into an orderly packet known as a tactoid. Each of these platelets is characterized by large aspect ratio (diameter/thickness on the order of 100-1000). Accordingly, when the clay is dispersed homogeneously and exfoliated as individual platelets throughout the polymer matrix, dramatic increases in strength, flexural and Young's modulus, and heat distortion temperature are observed at very low filler loadings (<10% by weight) because of the large surface area contact between polymer and filler.

Nanocomposites have enjoyed increased interest since the initial development of nylon-based material at Toyota Motor Corporation in the later 1980's and early 1990's; see, e.g., Usuki, A., et al., Journal of Materials Research, 8(5), 1179-1184, (1993) and M. Kawasumi, Journal of Polymer Science: Part A: Polymer Chemistry, 42, 819-824 (2004). Attempts to generate nanocomposites in a thermoplastic polyester matrix , however, have been only marginally successful.

U.S. Patent 5,965,655 describes compositions containing thermoplastics such as polyalkylene terephthalates and fillers such as wollastonite having specified particles size ranges which can have "Class A" surfaces. Specific compositions also containing exfoliated sepiolite-type clay, and/or toughening agents are not disclosed.

U.S. Patent 4,753,980 describes polyester compositions containing certain toughening agents. The use of exfoliated sepiolite-type clay is not mentioned in the patent.

Published US Patent Application 20050260361 describes certain polyester compositions suitable for appearance parts and methods for making the compositions. Sepiolite is not mentioned.

### SUMMARY OF THE INVENTION

This invention concerns a composition, comprising,
(a) at least 40 weight percent, based on the total of all ingredients in the composition, of at least one thermoplastic polyester with a melting point of 100°C or higher;
(b) 0.1 to 20 weight percent of sepiolite-type clay, based on the weight of polyester plus sepiolite-type clay.
(c) 0 to 35 weight percent, based on the total of all ingredients in the composition, of a reinforcing agent, exclusive of the sepiolite-type clay, with an average aspect ratio of 2.0 or more, and whose average longest dimension is 20 µm or less; and
(d) 1 to 30 weight percent, based on the total of all ingredients in the composition, of a polymeric toughening agent which contains functional groups reactive with said polyester;
provided that a mixture of said polyester and said sepiolite-type clay is prepared by a process comprising mixing a sepiolite-type clay with at least one polyester precursor selected from the group consisting of
(i) at least one diacid or diester and at least one diol;
(ii) at least one polymerizable polyester monomer;
(iii) at least one linear polyester oligomer, and
(iv) at least one macrocyclic polyester oligomer,
and subsequently polymerizing said at least one polyester precursor in the presence or absence of solvent;

This invention also concerns a process for the manufacture a composition, wherein said composition additionally comprises at least one or more active ingredients and optionally one or more inactive ingredients, comprising:
(a) preparing a second composition by mixing a sepiolite-type clay with at least one polyester precursor selected from the group consisting of
   (i) at least one diacid or diester and at least one diol;
   (ii) at least one polymerizable polyester monomer;
   (iii) at least one linear polyester oligomer, and
   (iv) at least one macrocyclic polyester oligomer,
   and subsequently polymerizing said at least one polyester precursor in the presence or absence of solvent;
(b) in a first mixing step, mixing materials comprising said second composition and said polymeric toughening agent to form an intermediate composition; and then
(c) in one or more subsequent mixing steps, mixing materials comprising said intermediate composition and one or more active ingredients; and provided that each of said one or more inactive ingredients is initially mixed in said first mixing step, or one or more of said subsequent mixing steps.

The compositions of this invention described above may also be coated in a process for coating substrates assembled from metal parts and at least one plastic part, with visible metal and plastic composition (above) surfaces, comprising the successive steps of:
(1) electrodeposition coating the substrates, removing non-deposited electrodeposition coating agent from the substrate and thermally cross-linking the deposited electrodeposition coating and thereby forming an electrodeposition coating primer on the metal surfaces,
(2) application and curing of at least one additional coating at least on some or all, preferably all, of the visible metal and plastic surfaces.

These two steps may also be carried out independently of one another.

### DETAILS OF THE INVENTION

In the context of this disclosure, a number of terms shall be utilized.

As used herein, the term "nanocomposite" or "polymer nanocomposite" or "nanocomposite composition" means a polymeric material which contains particles, dispersed throughout the polymeric material, having at least one dimension in the 0.1 to 100 nm range ("nanoparticles"). The polymeric material in which the nanoparticles are dispersed is often referred to as the "polymer matrix."

The term "polyester composite" refers to a nanocomposite in which the polymeric material includes at least one thermoplastic polyester. As mentioned above these types of compositions are therefore thermoplastic polyesters in which the sepiolite-type clay is dispersed in the polyester as (mostly) very small particles.

As used herein, the term "sepiolite-type clay" refers to both sepiolite and attapulgite (palygorskite) clays.

As used herein, for sepiolite-type clays, which are fibrous in nature," exfoliation" or "exfoliated" means the separation of fiber bundles or aggregates into nanometer diameter fibers which are then dispersed throughout the polymer matrix..

As used herein, "an alkylene group" means -CₙH₂ₙ- where n ≥ 1.

As used herein, "a cycloalkylene group" means a cyclic alkylene group, - CₙH₂ₙ₋ₓ-, where x represents the number of H's replaced by cyclization(s).

As used herein, "a mono- or polyoxyalkylene group" means [--(CH₂)_{y}-O-]ₙ-(CH₂)_{y} -, wherein y is an integer greater than 1 and n is an integer greater than 0.

As used herein, "an alicyclic group" means a non-aromatic hydrocarbon group containing a cyclic structure therein.

As used herein, "a divalent aromatic group" means an aromatic group with links to other parts of the macrocyclic molecule. For example, a divalent aromatic group may include a meta- or para-linked monocyclic aromatic group. Preferably the free valencies are to carbon atoms of aromatic rings.

As used herein, "visible substrate surfaces" means outer substrate surfaces which are directly visually accessible, in particular visible to an observer, for example, without the aid of special technical or visual aids.

As used herein, "polyester" means a condensation polymer in which more than 50 percent of the groups connecting repeat units are ester groups. Thus "polyester" may include polyesters, poly(ester-amides) and poly(ester-imides), so long at more than half of the connecting groups are ester groups. Preferably at least 70% of the connecting groups are esters, more preferably at least 90% of the connecting groups are ester, and especially preferably essentially all of the connecting groups are esters. The proportion of ester connecting groups can be estimated to a first approximation by the molar amounts of monomers used to make the polyester.

As used herein, "PET" means a polyester in which at least 80, more preferably at least 90, mole percent of the diol repeat units are from ethylene glycol and at least 80, more preferably at least 90, mole percent of the dicarboxylic acid repeat units are from terephthalic acid.

As used herein, "polyester precursor" means material which can be polymerized to a polyester, such as diacid (or diester)/diol mixtures, polymerizable polyester monomers, and polyester oligomers.

As used herein, "polymerizable polyester monomer" means a monomeric compound which polymerizes to a polymer either by itself or with other monomers (which are also present). Some examples of such compounds are hydroxyacids, such as the hydroxybenzoic acids, hydroxynaphthoic acids, and lactic acid; bis(2-hydroxyethyl) terephthalate; and lactide.

As used herein, "oligomer" means a molecule that contains 2 or more identifiable structural repeat units of the same or different formula.

As used herein, "linear polyester oligomer" means oligomeric material, excluding macrocyclic polyester oligomers (vide infra), which by itself or in the presence of monomers can polymerize to a higher molecular weight polyester. Linear polyester oligomers include, for example, oligomers of linear polyesters and oligomers of polymerizable polyester monomers. For example, reaction of dimethyl terephthalate or terephthalic acid with ethylene glycol, when carried out to remove methyl ester or carboxylic groups, usually yields a mixture of bis(2-hydroxyethyl) terephthalate and a variety of oligomers: oligomers of bis(2-hydroxyethyl) terephthalate, oligomers of mono(2-hydroxyethyl) terephthalate (which contain carboxyl groups), and polyester oligomers capable of being further extended. Preferably, in the practice of the present invention, such oligomers will have an average degree of polymerization (average number of monomer units) of 20 or less (preferably 2 to 20), more preferably 10 or less (preferably 2 to 10).

As used herein, a "macrocyclic" molecule means a cyclic molecule having at least one ring within its molecular structure that contains 8 or more atoms covalently connected to form the ring.

As used herein, "macrocyclic polyester oligomer" means a macrocyclic oligomer containing 2 or more identifiable ester functional repeat units of the same or different formula. A macrocyclic polyester oligomer typically refers to multiple molecules of one specific formula having varying ring sizes. However, a macrocyclic polyester oligomer may also include multiple molecules of different formulae having varying numbers of the same or different structural repeat units. A macrocyclic polyester oligomer may be a co-oligoester or multi-oligoester, i.e., a polyester oligomer having two or more different structural repeat units having an ester functionality within one cyclic molecule.

By "all percents by weight are based on the total of all ingredients in the composition" is meant that these percent are based on the total amount of (a), (b), and (c) present plus any other ingredients present in the composition.

By a "dicarboxylic acid" or, equivalently, "diacid" in the context of a polymerization process herein is meant the dicarboxylic acid (diacid) itself or any simple derivative such as a diester which may be used in such a polymerization process. Similarly by a "diol" is meant a diol or any simple derivative thereof which can be used in a polymerization process to form a polyester.

As used herein, "a solid particulate filler exclusive of the sepiolite-type clay" means any solid (infusible at temperatures to which the composition is normally exposed) which is finely divided enough to be dispersed under melt mixing conditions (see below) into the composition.

As used herein, "(meth)acrylate" means the compound may be either an acrylate, a methacrylate, or a mixture of the two.

Where a range of numerical values is recited herein, unless otherwise stated, the range is intended to include the endpoints thereof, and all integers and fractions within the range. It is not intended that the scope of the invention be limited to the specific values recited when defining a range.

### Polyester Composition

The process for manufacturing the polyester/ sepiolite-type clay composition (sometimes "second composition" above) (nanocomposite) used in the present invention comprises mixing a sepiolite-type clay with at least one polyester precursor selected from the group consisting of
(i) at least one diacid or diester and at least one diol;
(ii) at least one polymerizable polyester monomer,
(iii) at least one linear polyester oligomer, and
(iv) at least one macrocyclic polyester oligomer,
and subsequently polymerizing the at least one polyester precursor in the presence or absence of solvent. Details of how to make the polyester-sepiolite-type clay composition (nanocomposite) are found below and in U.S. Patent Application (CL2810), filed of even date herewith, which is hereby included by reference.

### Sepiolite and Attapulgite

Sepiolite [Mg₄Si₆O₁₅(OH)₂·6(H₂O)] is a hydrated magnesium silicate filler that exhibits a high aspect ratio due to its fibrous structure. The material has been shown to consist of two forms, an α and a β form. The α form is known to be long bundles of fibers and the β form is present as amorphous aggregates.

Attapulgite (also known as palygorskite) is almost structurally and chemically identical to sepiolite except that attapulgite has a slightly smaller unit cell. As used herein, the term "sepiolite-type clay" includes attapulgite as well as sepiolite itself.

The amount of sepiolite-type clay used in the present invention ranges from 0.1 to 20 wt % based on the weight of polyester plus sepiolite-type clay. The specific amount chosen will depend on the intended use of the nanocomposite composition, as is well understood in the art.

Sepiolite-type clays are available in a high purity ("rheological grade"), uncoated form (e.g., Pangel® S9 sepiolite clay from the Tolsa Group, Madrid, Spain) or, more commonly, treated with an organic material to make the clay more "organophilic," i.e., more compatible with systems of low-to-medium polarity (e.g., Pangel® B20 sepiolite clay from the Tolsa Group). An example of such a coating for sepiolite-type clay is a quaternary ammonium salt such as dimethylbenxylalkylammonium chloride, as disclosed in European Patent Application 221,225.

### Polyesters

The polyester used may be any polyester with the requisite melting point. Preferably the melting point of the polyester is 150°C or higher, and more preferably 200°C or higher. Polyesters (which have mostly or all ester linking groups) are normally derived from one or more dicarboxylic acids and one or more diols. They can also be produced from polymerizable polyester monomers or from macrocyclic polyester oligomers.

Polyesters most suitable for use in practicing the invention comprise isotropic thermoplastic polyester homopolymers and copolymers (both block and random).

The production of polyesters from diols and hydrocarbyl diacids or esters of such diacids is well known in the art, as described by A. J. East, M. Golden, and S. Makhija in the Kirk-Othmer Encyclopedia of Chemical Technology, John Wiley & Sons, J. I. Kroschwitz exec. ed., M. Howe-Grant, ed., 4th edition (1996), vol. 19, 609-653. In the first stage, esterification or ester interchange between the diacid or its dialkyl (typically dimethyl) ester and the diol takes place to give the bis(hydroxyalkyl)ester and some oligomers along with the evolution and removal of water or alcohol (typically methanol). Because the esterification or ester-interchange is an inherently slow reaction, catalysts are commonly used. Examples of useful esterification or ester-interchange catalysts are calcium, zinc, and manganese acetates; tin compounds; and titanium alkoxides. In the second stage, polycondensation, the bis(hydroxyalkyl)ester and oligomers continue to undergo ester-interchange reactions, eliminating diol, which is removed under high vacuum, and building molecular weight. Examples of useful polycondensation catalysts include tin, titanium, antimony, and germanium compounds, particularly antimony oxide (Sb₂O₃) in the case of poly(ethylene terephthalate) (PET).

Among suitable diacids (and their corresponding esters) are those selected from the group consisting of terephthalic acid, isophthalic acid, naphthalene dicarboxylic acids, cyclohexane dicarboxylic acids, succinic acid, glutaric acid, adipic acid, sebacic acid, 1,12-dodecanedioic acid, fumaric acid, maleic acid, and the derivatives thereof, such as, for example, the dimethyl, diethyl, or dipropyl esters.

Some representative examples of glycols that can be utilized as the diol component include ethylene glycol, 1,3-propylene glycol, 1,2-propylene glycol, 2,2-diethyl-1,3-propane diol, 2,2-dimethyl-1,3-propane diol, 2-ethyl-2-butyl-1,3-propane diol, 2-ethyl-2-isobutyl-1,3-propane diol, 1,3-butane diol, 1,4-butane diol, 1,5-pentane diol, 1,6-hexane diol, 2,2,4-trimethyl-1,6-hexane diol, 1,2-cyclohexane dimethanol. 1,3-cyclohexane dimethanol, 1,4-cyclohexane dimethanol, 2,2,4,4-tetramethyl-1,3-cyclobutane diol, isosorbide, naphthalene glycols, diethylene glycol, triethylene glycol, resorcinol, hydroquinone, and longer chain diols and polyols, such as polytetramethylene ether glycol, which are the reaction products of diols or polyols with alkylene oxides.

In one preferred type of polyester, the dicarboxylic acids comprise one or more of terephthalic acid, isophthalic acid and 2,6-naphthalene dicarboxylic acid, and the diol component comprises one or more of HO(CH₂)ₙOH (I), 1,4-cyclohexanedimethanol, HO(CH₂CH₂O)ₘCH₂CH₂OH (II), and HO(CH₂CH₂CH₂CH₂O)₂CH₂CH₂CH₂CH₂OH (III), wherein n is an integer of 2 to 10, m on average is 1 to 4, and is z an average of 7 to 40. Note that (II) and (III) may be a mixture of compounds in which m and z, respectively, may vary and hence since m and z are averages, they do not have to be integers. In preferred polyesters, n is 2, 3 or 4, and/or m is 1.

Polyesters can also be produced directly from polymerizable polyester monomers. Some representative examples of suitable polymerizable polyester monomers for use in the present invention include hydroxyacids such as hydroxybenzoic acids, hydroxynaphthoic acids and lactic acid; bis(2-hydroxyethyl) terephthalate, bis(4-hydroxybutyl) terephthalate, bis(2-hydroxyethyl)naphthalenedioate, bis(2-hydroxyethyl)isophthalate, bis[2-(2-hydroxyethoxy)ethyl]terephthalate, bis[2-(2-hydroxyethoxy)ethyl]isophthalate, bis[(4-hydroxymethylcydohexyl)methyl]terephthalate, and bis[(4-hydroxymethylcyclohexyl)methyl]isophthalate, mono(2-hydroxyethyl)terephthalate, bis(2-hydroxyethyl)sulfoisophthalate, and lactide.

Polyesters can also be produced directly from macrocyclic polyester oligomers. Macrocyclic polyester oligomers that may be employed in this invention include, but are not limited to, macrocyclic poly(alkylene dicarboxylate) oligomers having a structural repeat unit of the formula: 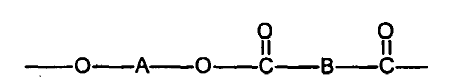 wherein A is an alkylene group containing at least two carbon atoms, a cycloalkylene, or a mono- or polyoxyalkylene group; and B is a divalent aromatic or alicyclic group. They may be prepared in a variety of ways, such as those described in U.S. Pat. Nos. 5,039,783, 5,231,161, 5,407,984, 5,668,186, United States Provisional Patent Application No. 60/626187, PCT Patent Applications WO 2003093491 and WO 2002068496, and A. Lavalette, et al., Biomacromolecules, vol. 3, p. 225-228 (2002). Macrocyclic polyester oligomers can also be obtained through extraction from low-molecular weight linear polyester.

Preferred macrocyclic polyester oligomers are macrocyclic polyester oligomers of 1,4-butylene terephthalate (CBT); 1,3-propylene terephthalate (CPT); 1,4-cyclohexylenedimethylene terephthalate (CCT); ethylene terephthalate (CET); 1,2-ethylene 2,6-naphthalenedicarboxylate (CEN); the cyclic ester dimer of terephthalic acid and diethylene glycol (CPEOT); and macrocyclic cooligoesters comprising two or more of the above structural repeat units.

The polyesters may be branched or unbranched, and may be homopolymers or copolymers.

Particularly notable are "modified polyesters" which are defined as being modified with up to 10% by weight of a comonomer. Unless indicated otherwise, by the term polyester polymer (or oligomer) is meant modified and unmodified polyester polymers (or oligomers). Similarly, by the mention of a particular polyester, for example, poly(ethylene terephthalate) (PET), is meant unmodified or modified PET. Comonomers can include diethylene glycol (DEG), triethylene glycol, 1,4-cyclohexane dimethanol, isosorbide, isophthalic acid (IPA), 2,6-naphthalene dicarboxylic acid, adipic acid and mixtures thereof. Typically preferred comonomers for PET include 0-5% by weight isophthalic acid (IPA) and 0-3% by weight DEG.

Specific preferred polyesters include poly(ethylene terephthalate) (PET), poly(1,3-propylene terephthalate) (PPT), poly(1,4-butylene terephthalate) (PBT), a thermoplastic elastomeric polyester having poly(1,4-butylene terephthalate) and poly(tetramethylene ether)glycol blocks (available as Hytrel® from E. I. DuPont de Nemours & Co., Inc., Wilmington, DE 19898 USA), and poly(1,4-cylohexyldimethylene terephthalate) (PCT). PET is especially preferred.

Preferably the composition contains at least 40 weight percent polyester (component (a)), more preferably at least 50 weight percent based on the total composition. If a blend of two or more polyesters is used, it is preferred that the polyester component of the composition has at least one melting point which is 150°C or more (depending on mixing conditions, if two or more polyesters are used, transesterification may take place).

### Process conditions

Process conditions for making the nanocomposite (composition) are the same as those known in the art for manufacturing polyesters in a melt or solution process, and a melt process is preferred. The sepiolite-type clay can be added by any means known in the art at any convenient stage of manufacture from before the polyester degree of polymerization is 20. For example, it can be added at the beginning with the monomers, during monomer esterification or ester-interchange, at the end of monomer esterification or ester-interchange, or early in the polycondensation step.

The polymerization process may be done in any way known in the art. For example it may be a batch, semibatch or continuous process. Both these types of processes are will known in the art, see A. J. East, et al., cited above. For commercial use a continuous process is preferred. Another process variation is melt polymerization of the polyester precursors to a polyester whose molecular weight is suitable for so-called solid state polymerization, and then subjecting this polyester to solid state polymerization to achieve the desired molecular weight.

In other preferred process embodiments, especially continuous processes, the sepiolite can be added to the polyester manufacturing process at any point starting with the monomer reactor (where the diacid and the diol are reacted to from the polyester monomer) up to but not including the 'finisher' (the vessels where the final molecular weight is achieved). In one embodiment, the sepiolite can be added as a dry powder directly into the process into the molten monomer, oligomer or prepolymer. This includes direct introduction to the process as a stand alone material or in combination with another dry powder such as terephthalic acid or isophthalic acid. In another embodiment the sepiolite can be added to a side stream of the molten process monomer, oligomer or prepolymer where it is mixed with this side stream and the combined stream is reinjected into the process. In another embodiment, the sepiolite can be slurried or made into a paste using one of the ambient temperature liquid ingredients of the polyester manufacturing process and the resulting slurry or paste can be injected into the process. The ambient temperature liquid ingredients include ethylene glycol, 1,4-butanediol, and 1,3-propanediol, 1,4-cyclohexanedimethanol. In another embodiment, sepiolite can be mixed with molten ingredients, such as dimethyl terephthalate, and added to process.

Where it is desired to add the sepiolite as a slurry with one of the ambient temperature liquid ingredients or higher melting ingredients, the slurry can be prepared by mixing 0.1% to 20% sepiolite with 80% to 99.9% liquid ingredient by weight. In one embodiment 4% to 7% sepiolite and 93% to 95% liquid ingredient are mixed. In another embodiment 7% to 9% sepiolite by weight and 91% to 93% by weight liquid ingredient are mixed. In another embodiment 9% to 12% sepiolite and 88% to 91% liquid ingredient by weight are mixed. In another embodiment 12% to 16% sepiolite and 84% to 88% liquid ingredient by weight are mixed.

In one preferred way of carrying out the process the sepiolite-type clay is added to one or more of the polyester precursors, especially to a liquid diol, if a diol is used in the polymerization. It is preferred to mix the liquid diol and clay so that the clay particles are wetted by the diol. Optionally also present in the diol when the clay is added and/or mixed may be other monomers such as dicarboxylic acids or their esters, and hydroxycarboxylic acids. If a diol is not used the clay may be mixed with any other liquid monomer or polyester precursor. Again it is preferred that the clay is wetted by the polyester precursor(s). The wetting of the clay may be carried out by merely mixing the slurry of liquid polyester precursor(s) and clay, and optionally other solid polyester precursors. Other more intensive mixing methods may also be used, such as using a "homogenizer" or a paint mill. Also any other additional fillers may be present at this time.

Other materials may also optionally be present during the polymerization process, such as stabilizers, antioxidants, and other materials sometimes added to such processes. Other filler(s) and/or reinforcing agent(s) may also be present in the polymerization, either from the beginning of the process or added during the process as long as they do not interfere with the polymerization itself. If the composition is meant for eventual use in appearance parts these solids should preferably meet the particle size specifications outlined herein. However they need not meet these specifications if the composition is not meant to be used for appearance parts.

In the case that the production of DEG needs to be controlled during a reaction in which ethylene glycol is a monomer" a range of catalysts can be used. These include the use of lithium acetate buffers as described in U. S. Patent 3,749,697 and a range of sodium and potassium acetate buffers as described in JP 83-62626, RO 88-135207, and JP 2001-105902. Typically, 100-600 ppm of sodium or potassium acetate is used during the polymerization to minimize the degree of DEG formation and incorporation into the polymer.

### Reinforcing agent (exclusive of the sepiolite-type clay)

Component (c), the reinforcing agent exclusive of the sepiolite-type clay, has an average aspect ratio of 2.0 or more, preferably 2.5 or more, more preferably 3.0 or more, and especially preferably 4.0 or more. Oftentimes as the aspect ratio of the particles increases, the heat sag (see below) decreases and stiffness increases. The average maximum dimension is 20 µm or less, more preferably 15 µm or less, very preferably 10 µm or less. A preferred minimum average longest dimension is 0.10 µm or more, more preferably 0.5 µm or more. Preferably less than 10% of the particles have a longest dimension of 100 µm or more, more preferably less than 5%. Any of these ratios or dimensions may be combined with any other ratios or dimensions of the reinforcing agent, as appropriate. Surface smoothness is often improved is the particle size of the reinforcing agent is towards the small end of the range.

Useful specific reinforcing agents for component (c) include wollastonite, mica, talc, aramid fibers, fibrils or fibrids, carbon fibers, potassium titanate whiskers, boron nitride whiskers, aluminum borate whiskers, magnesium sulfate whiskers and calcium carbonate whiskers. Preferred reinforcing fillers are wollastonite, mica, talc, potassium titanate whiskers, boron nitride whiskers and aluminum borate whiskers, and especially preferred reinforcing agents are wollastonite, talc and potassium titanate whiskers. All of these specific reinforcing agents should have the appropriate dimensions as outlined above. These reinforcing agents may be coated with adhesion promoters or other materials which are commonly used to coat reinforcing agents used in thermoplastics.

Preferably, the amount of reinforcing agent (c) is from 0 to 35 weight percent of the composition, more preferably 5 to 20 weight percent. Generally speaking, the more reinforcing agent (c) in the composition the stiffer the composition will be; in many cases the heat sag (see below) will be decreased and sometimes the surface will be rougher.

### Polymeric toughening agent

Materials used to toughen polymers are well known. Two examples of the many references in this area are Polymer Blends - Volume 2: Performance, D. R. Paul and C. B. Bucknall, eds., John Wiley & Sons (2000) and Rubber-toughened Plastics (Advances in Chemistry Series No. 222), C. K. Riew (ed.), American Chemical Society (1989).

The polymeric toughening agent (component (d)) is a polymer, typically which is an elastomer or has a relatively low melting point, generally <200°C, preferably <150°C, which has attached to it functional groups which can react with the polyester. Since polyesters usually have carboxyl and hydroxyl groups present, these functional groups usually can react with carboxyl and/or hydroxyl groups. Examples of such functional groups include epoxy, carboxylic anhydride, hydroxyl (alcohol), carboxyl, isocyanato, and primary or secondary amino. Preferred functional groups are epoxy and carboxylic anhydride, and epoxy is especially preferred. Such functional groups are usually "attached" to the polymeric toughening agent by grafting small molecules onto an already existing polymer or by copolymerizing a monomer containing the desired functional group when the polymeric tougher molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it. An example of a polymeric toughening agent wherein the functional groups are copolymerized into the polymer is a copolymer of ethylene and a (meth)acrylate monomer containing the appropriate functional group. By (meth)acrylate herein is meant the compound may be either an acrylate, a methacrylate, or a mixture of the two. Useful (meth)acrylate functional compounds include (meth)acrylic acid, 2-hydroxyethyl(meth)acrylate, glycidyl(meth)acrylate, and 2-isocyanatoethyl (meth)acrylate. In addition to ethylene and a difunctional (meth)acrylate monomer, other monomers may be copolymerized into such a polymer, such as vinyl acetate, unfunctionalized (meth)acrylate esters such as ethyl (meth)acrylate, n-butyl (meth)acrylate, and cyclohexyl (meth)acrylate. Preferred tougheners include those listed in U.S. Patent 4,753,980. Especially preferred tougheners are copolymers of ethylene, ethyl acrylate or n-butyl acrylate, and glycidyl methacrylate.

It is preferred that the polymeric toughener contain 0.5 to 20 weight percent of monomers containing functional groups, preferably 1.0 to 15 weight percent, more preferably 7 to 13 weight percent of monomers containing functional groups. There may be more than one type of functional monomer present in the polymeric toughener. It has been found that toughness of the composition is increased by increasing the amount of polymeric toughener and/or the amount of functional groups. However, these amounts should preferably not be increased to the point that the composition may crosslink, especially before the final part shape is attained. Preferably there is 3 to 25 weight percent of the polymeric toughener in the composition, more preferably 10 to 20 weight percent. A mixture of 2 or more polymeric tougheners may be used in the same composition. At least one must contain reactive functional groups, but the other(s) may or may not contain such functional groups. For instance, tougheners which do not contain functional groups include ethylene-n-butyl acrylate copolymer, ethylene/n-butyl acrylate/carbon monoxide copolymer and a plastomeric polyethylene such as Engage® 8180 (an ethylene/1-octene copolymer) or Engage® 7447 (an ethylene/1-butene copolymer), available from the DuPont-Dow Elastomers, Wilmington, Delaware USA.

### Other ingredients

Other ingredients may also be present in the composition, particularly those that are commonly added to thermoplastic compositions. Such ingredients include antioxidants, pigments, fillers, lubricant, mold release, flame retardants, (paint) adhesion promoters, epoxy compounds, crystallization nucleation agents, plasticizers, etc. Other polymers such as polyolefins, polyamides, and amorphous polymers such as polycarbonates, styrene (co)polymers and poly(phenylene oxides) may also be present. Preferably the total of all these ingredients is less than 60 weight percent, very preferably less than 40 weight percent, more preferably less than 25 weight percent of the total composition. If any of these materials is a solid particulate material, it is preferred that the average longest dimensions of the particles is 20 µm or less, more preferably 15 µm or less. A preferred other ingredient is a plasticizer for the polyester, particularly when PET is present as a polyester, preferably present in an amount of 0.5 to 8 weight percent of total composition.

A preferred type of other ingredient is an epoxy compound or resin. Preferably such a compound or resin has an average molecular weight of less than 1000 (the polymeric toughening agent as described above, even if it does contain epoxy groups, is not considered herein part of this epoxy compound or resin). This epoxy material is preferably present at a level of 0.1 to 1.0 weight percent of the entire composition. Useful epoxy compounds or resins include Epon® 1009F, 1002F or 1031 (Resolution Performance Products, Houston, Texas), or Araldite® GT7099 or GT6099 (Huntsman Advanced Materials Americas Inc., Los Angeles, California). It is believed that in some instance the epoxy compound or resin stabilizes melt viscosity and/or improves color stability of the composition. The latter is particularly important when an appearance part is not coated with a paint or other coating.

Another way of classifying "other ingredients" is whether these ingredients contain functional groups which readily react (particularly under mixing conditions) with the functional groups of the polymeric toughening agent, component (d). Ingredients, particularly "other ingredients" containing complementary reactive functional groups, are termed "active ingredients" (or "inactive ingredients" if they don't contain such reactive groups) herein. The Table below gives a partial listing of "reactive groups" which may be part of component (d), together with complementary reactive groups which may be part of active ingredients.

**Table 1.**

| Reactive Group | Complementary Groups |
|---|---|
| | |
| epoxy | Carboxyl, hydroxyl, amino |
| carboxylic anhydride | Hydroxyl, amino |
| amino | Carboxyl, hydroxyl, epoxy, chloro |
| isocyanato | Carboxyl, hydroxyl, amino |
| hydroxyl | Carboxyl, carboxylic anhydride, epoxy |
| chloro, bromo | Amino |

Not included in "active ingredients" are polymers having a number average molecular weight of 5,000 or more, preferably 10,000 or more, and some or all of whose complementary end groups may be reactive (with the functional groups of the polymeric toughener). Polymers having reactive groups which are not end groups, and which may or may not have reactive end groups, are active ingredients.

Another preferred ingredient is a lubricant, sometimes called a mold release or release agent. Typically, 0.05 to 1.0 weight percent (of the total composition) of lubricant is used. Many types of materials are sold as lubricants, and in the present compositions due regard should especially be given to their effects on mold release and paint adhesion (assuming the part is to be painted), as well as other physical properties. Lubricants may be active or inactive ingredients. For instance, one type of preferred lubricant is polyethylene wax, a polyethylene usually having a number average molecular weight of 1,000 to 10,000. The end groups on these waxes may be nonpolar (for instance, methyl ends), or may comprise polar groups, for instance carboxyl groups. The carboxyl ended waxes will, with polymeric tougheners having appropriate reactive groups, be considered reactive ingredients (when their molecular weights are below 5000). Such waxes are commercially available; see for instance the Licowax® brand product line, available from Clariant Corp., Charlotte, NC 28205, USA. In some compositions, inactive lubricants such as Licowax® PE 520 or PE 190 are preferred. However, lubricants such as Licowax® PED 521 or PED 191, which are also active ingredients, can also be used. Another useful (type of) lubricant is Loxiol® HOB7119 pentaerythritol tetrastearate.

Another preferred type of ingredient is an electrically conductive filler, such as carbon black, carbon fibers, and (chopped) metallic wires. When present in sufficient amounts they render the composition more electrically conducting, which may make composition more suitable for electrostatically assisted coating. See for instance Published U. S. Patent Application 20050186438, which is hereby included by reference.

### Melt mixing

The compositions described herein can be made using typical melt compounding techniques. For instance, the polyester component may be added to a single or twin screw extruder or a kneader with the other ingredients and mixed in the normal manner. The at least 40 weight percent polyester for the composition may be added as all polyester containing the sepiolite-type clay or as a pellet blend of polyester plus polyester containing the sepiolite-type clay. Preferably, the temperature of the ingredients in at least part of the mixing apparatus is at or above the melting point of the polyester present (the measured or set temperature in any zone of the mixing apparatus may be below the actual material temperature because of mechanical heating). Some of the ingredients, such as fillers, plasticizers, crystallization nucleating agents, and lubricants (mold release agents), may be added at one or more downstream points in the extruder, so as to decrease attrition of solids such as fillers, and/or improve dispersion, and/or decrease the thermal history of relatively thermally unstable ingredients, and/or reduce loss of volatile ingredients by vaporization.

When one or more "active ingredients" are present in the composition, a particular variation of the above compounding procedure is preferred. In this variation, the polyester the sepiolite-like clay, the optional neat polyester, the polymeric toughening agent, and optionally additional inactive ingredients are mixed is a first mixing step to form an intermediate composition. Any reactive ingredients and optionally inactive ingredients, as described above, are mixed into the intermediate composition in one or more subsequent mixing steps. This can be accomplished in a number of different ways. For instance, the first mixing step can be carried out in a single pass through a single or twin screw extruder or other type of mixing apparatus, and then the other ingredients are added during a second pass through a single or twin screw extruder or other mixing apparatus. Alternatively, the first mixing step is carried out in the "back end" (feed end) of a single or twin screw extruder or similar device and then the materials to be added for the second mixing step are added somewhere downstream to the barrel of the extruder, thereby mixing in the materials for the second mixing step. The added materials for the second mixing step may be added by a so-called "side feeder" or "vertical feeder" and/or if liquid by a melt pump. More than one side feeder may be used to introduce different ingredients. As noted above, it may be preferable to add inactive ingredients in side and/or vertical feeders for other reasons. The use of an extruder with one or more side and/or vertical feeders is a preferred method of carrying out the first and second mixing steps. If an inactive lubricant is used, it is also preferred that it be added in the second mixing step. If two or more mixing passes are done, the machine(s) for these passes may be the same or different (types).

It has also been found that the mixing intensity [for example, as measured by extruder speed (revolutions per minute, rpm)] may affect the properties of the composition, especially toughness. While relatively higher rpm are preferred, the toughness may decrease at too high a mixer rotor speed. The optimum mixing intensity depends on the configuration of the mixer, the temperatures, compositions, etc. being mixed, and is readily determined by simple experimentation.

After the materials are mixed, they may be formed (cut) into pellets or other particles suitable for feeding to a melt forming machine. Melt forming can be carried out by the usual methods for thermoplastics, such as injection molding, thermoforming, extrusion, blow molding, or any combination of these methods.

### Appearance parts

The compositions described herein are particularly useful as "appearance parts," that is, parts in which the surface appearance is important. This is applicable whether the composition's surface is viewed directly, or whether it is coated with paint or another material such as a metal. Such parts include automotive body panels such as fenders, fascia, hoods, tank flaps and other exterior parts; interior automotive panels; appliance parts such as handles, control panels, chassises (cases), washing machine tubs and exterior parts, interior or exterior refrigerator panels, and dishwasher front or interior panels; power tool housings such as drills and saws; electronic cabinets and housings such as personal computer housings, printer housings, peripheral housings, server housings; exterior and interior panels for vehicles such as trains, tractors, lawn mower decks, trucks, snowmobiles (especially snowmobile hoods), aircraft, and ships; decorative interior panels for buildings; furniture such as office and/or home chairs and tables; and telephones and other telephone equipment. As mentioned above these parts may be painted or they may be left unpainted in the color of the composition.

The composition may be colored with pigments and/or dyes, so many color variations are possible. This type of coloration of parts made from the composition is particularly attractive economically, since such parts need not be subsequently coated (painted) in one or more additional steps. If extremely high gloss and/or distinctness of image are not needed, this is often a better overall alternative to coating.

Another method of applying a coating (which may be colored) to the surface is a dye sublimation (printing) process.

### Automotive requirements

Automotive (transportation) body panels are an especially challenging application. As mentioned above, these materials should preferably have smooth and reproducible appearance surfaces, be heat resistant so they can pass through without significant distortion automotive E-coat and paint ovens where temperatures may reach as high as about 200°C for up to 30 minutes for each step, be tough enough to resist denting or other mechanical damage from minor impacts. It has been particularly difficult to obtain compositions which have good toughness yet retain good heat resistance and excellent surface appearance, because generally speaking when one of the properties is improved, another deteriorates. In the present composition, good heat resistance and good toughness may be achieved, as illustrated in some of the Examples herein.

Heat resistance is commonly measured for this use by a heat sag test. In this test a sample, which is suspended in a cantilever fashion, is heated to a test temperature for a given amount of time, and the amount the part has sagged is measured after cooling to room temperature. The lower the value, the better the heat sag. In the present composition, improved (lowered) heat sag is favored by a higher melting point of the polyester, lower toughener content, higher exfoliated sepiolite-type clay content, and higher reinforcing agent content. On the other hand, toughness is improved (increased) by higher toughener content, lower reinforcing agent content, lower sepiolite-type clay content, and higher functional group content in the toughener (within limits). As mentioned above, the present composition often gives wide latitude to obtaining a material which has the requisite properties for an automotive body panel or other parts.

### Coating processes

In the coating processes, according to the invention, preferably substrates assembled from metal parts and at least one plastic part as defined herein in a mixed construction, in particular, car bodies, are coated, at least in part, and preferably completely.

The metal parts can be parts made from a variety of metals, for example, of galvanized or ungalvanized steel, aluminum and aluminum alloys, magnesium and magnesium alloys. The metal parts may be pretreated or not, for example, may have been conventionally phosphatized and/or passivated.

The plastic parts may be pretreated in a conventional manner, for example, by UV irradiation, flame treatment or plasma treatment or be coated with a conventional plastic primer known to the person skilled in the art, in particular, a conductive primer providing the plastic part with adequate electrical conductivity for electrostatically-assisted coatability, before they are assembled with the metal parts.

The metal parts and the at least one plastic part optionally provided with a plastic primer are assembled in the conventional manner known to the person skilled in the art, for example by screwing, clipping and/or adhesion, to form the substrate to be coated by the process according to the invention.

At least that (those) plastic part(s) of a substrate with the smallest possible joint width and in particular also in the same plane as the adjacent metal parts is (are) assembled with the metal parts.

Optionally, further still missing plastic parts, if any, which in general will differ in composition from the at least one plastic part and which in general are less resistant to heat deformation can be fitted on after completion of step (1) of the process according to the invention and can also be subjected to the further coating process of step (2) (compare the in-line process described above) and/or be fitted on after completion of the process according to the invention in finished coated form (compare the off-line process described above).

In view of the application of at least one further coating layer, taking place in step (2) of the process according to the invention, preferably by electrostatically-assisted spray coating, it is expedient if the metal and plastic part(s) are assembled such that that they are not electrically insulated from one another; for example a direct electric contact between the conductive primer and metal can be ensured by direct contact or via electrically conductive connecting elements, for example metal screws.

To produce an anti-corrosive primer layer on the metal parts, the substrates assembled from metal parts and at least one plastic part in step (1) of the process according to the invention are coated in an electrodeposition coating bath in the conventional manner known to the person skilled in the art.

Suitable electrodeposition coating agents include conventional waterborne coating compositions with a solids content from, for example, 10 to 30 wt. percent.

The electrodeposition coating compositions may be conventional anodic electrodeposition coating agents known to the skilled person. The binder basis of the anodic electrodeposition coating compositions may be chosen at will. Examples of anodic electrodeposition binders are polyesters, epoxy resin esters, (meth)acrylic copolymer resins, maleinate oils or polybutadiene oils with a weight average molecular mass (Mw) of, for example, 300-10 000 and a carboxyl group content, for example, corresponding to an acid value of 35 to 300 mg KOH/g. At least a part of the carboxyl groups is converted to carboxylate groups by neutralization with bases. These binders may be self cross-linking or crosslinked with separate cross-linking agents.

Preferably conventional cathodic electrodeposition coating agents known to the skilled person are used in the process according to the invention for the application of the electrodeposition coating layer. Cathodic electrodeposition coating compositions contain binders with cationic groups or groups which can be converted to cationic groups, for example, basic groups. Examples include amino, ammonium, e.g., quaternary ammonium, phosphonium and/or sulfonium groups. Nitrogen-containing basic groups are preferred; said groups may be present in the quaternized form or they are converted to cationic groups with a conventional neutralizing agent, e.g., an organic monocarboxylic acid such as, e.g., formic acid, lactic acid, methane sulfonic acid or acetic acid. Examples of basic resins are those with primary, secondary and/or tertiary amino groups corresponding to an amine value from, for example, 20 to 200 mg KOH/g. The weight average molecular mass (Mw) of the binders is preferably 300 to 10,000. Examples of such binders are amino(meth)acrylic resins, aminoepoxy resins, aminoepoxy resins with terminal double bonds, aminoepoxy resins with primary OH groups, aminopolyurethane resins, amino group-containing polybutadiene resins or modified epoxy resin-carbon dioxide-amine reaction products. These binders may be self-cross-linking or they may be used with known cross-linking agents in the mixture. Examples of such cross-linking agents include aminoplastic resins, blocked polyisocyanates, cross-linking agents with terminal double bonds, polyepoxy compounds or cross-linking agents containing groups capable of transesterification.

Apart from binders and any separate cross-linking agents, the electrodeposition coating compositions may contain pigments, fillers and/or conventional coating additives. Examples of suitable pigments include conventional inorganic and/or organic colored pigments and/or fillers, such as carbon black, titanium dioxide, iron oxide pigments, phthalocyanine pigments, quinacridone pigments, kaolin, talc or silicon dioxide. Examples of additives include, in particular, wetting agents, neutralizing agents, leveling agents, catalysts, corrosion inhibitors, anti-cratering agents, anti-foaming agents, solvents.

Electrodeposition coating takes place in a conventional manner known to the skilled person, for example, at deposition voltages from 200 to 500 V. After deposition of the electrodeposition coating, the substrate is cleaned from excess and adhering but non-deposited electrodeposition coating in a conventional manner known to the skilled person, for example, by rinsing with water. Thereafter the substrate is baked at oven temperatures of, for example, up to 220°C according to object temperatures of, for example, up to 200°C in order to crosslink the electrodeposition coating.

In the subsequent step (2) of the process according to the invention, at least one further coating layer is applied, preferably by spray application, in particular electrostatically-assisted spray application, at least to all the visible metal and plastic surfaces on the substrates thus obtained and only provided with a baked electrodeposition coating layer on the metal surfaces.

If only one further coating layer is applied, this is generally a pigmented top coat. However, it is preferred to apply more than one further coating layer. Examples of conventional multicoat constructions formed from a plurality of coating layers are:
- primer surfacer/top coat.
- primer surfacer/base coat/clear coat,
- base coat/clear coat, .
- primer surfacer substitute layer/base coat/clear coat.

Primer surfacers or primer surfacer substitute coatings are mainly used for stone-chip protection and surface leveling and prepare the surface for the subsequent decorative top coat which provides protection against environmental influences and is made of pigmented top coat or of color- and/or effect-producing base coat and protective clear coat.

The multicoat constructions mentioned by way of example may also be provided over the entire surface or part of the surface with a transparent sealing coat, in particular providing high scratch-resistance.

All these coating layers following the electrodeposition coating layer may be applied from conventional coating agents well known to the person skilled in the art for applying the relevant coating layer. This can be a respective liquid coating agent containing, for example, water and/or organic solvents as diluents or a powder coating agent. The coating agents may be a single-component or multi-component coating agent; they may be physically drying or by oxidation or be chemically crosslinkable. In particular, primer surfacers, top coats, clear coats and sealing coats these are generally chemically cross-linking systems which can be cured thermally (by convection and/or by infrared irradiation) and/or by the action of energy-rich radiation, in particular ultraviolet radiation.

If more than one coating layer is applied in step (2) of the process according to the invention, the coating layers do not basically have to be cured separately prior to application of the respective subsequent coating layer. Rather, the coating layer can be applied according to the wet-on-wet principle known to the person skilled in the art, wherein at least two coating layers are cured together. In particular, for example, in the case of base coat and clear coat, following the application of the base coat, optionally followed by a short flash-off phase, the clear coat is applied and cured together with the base coat.

The on-line process according to the invention allows substrates assembled in a mixed construction from metal parts and plastic parts which are based on thermoplastics and are adequately resistant to heat deformation to be coated with excellent harmonization of the visual impression of the coated plastic and metal surfaces.

Surface quality can be judged by a variety of methods. One is simply visual, observing the smoothness and the reflectivity of the surface, and how accurately it reflects its surroundings. Another more systematic method is DOI (distinctness of image). It is preferred that the appearance surfaces (those that need to be smooth, etc.) have a DOI of 65 or more, more preferably 70 or more, when measured using the AutoSpect® Paint Appearance Quality Measurement system. It is understood by the artisan that factors other than the composition itself can affect the surface quality of a part produced. For example the condition (porosity, flatness) of the mold surface, molding conditions such as fill time and fill pressure, mold design such as gate location and thickness of the part, mold and melt temperatures, and other factors can affect surface quality. If painted, the surface quality also depends on the painting technique used and the quality of the paint which is applied.

### Nonappearance parts

Nonappearance parts may also be made with these compositions. These are parts whose surface appearance is not critical. Such parts include those now made with so-called engineering thermoplastics, especially those which are filled with materials which are designed to enhance the composition's physical properties, such as stiffness, toughness and tensile strength.

### EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "s" means second(s), "min" means minute(s), "m" means meter(s), "cm" means centimeter(s), "mm" means millimeter(s), "µm" means micrometer(s), "kg" means kilogram(s), "oz" means ounce "g" means gram(s), "lb" means pound(s), "M" means molar, "wt%" means weight percent(age), "DMT" means dimethyl terephthalate, "NMR" means nuclear magnetic resonance, "SEC" means size exclusion chromatography, "Mₙ" means number average molecular weight, "MV" means melt viscosity, "rpm" means revolutions per minute, "Pa-s" means Pascal-second(s), psi" means pound per square inch and "HUT" means hold-up time.

### Materials.

In the Examples certain ingredients are used, and they are defined below:
Antimony oxide (99%) - catalyst available from Aldrich Chemical Company, Milwaukee, WI, USA.
Dimethyl terephthalate - monomer available from INVISTA, Wichita, KS, USA.
Ethylene glycol - monomer available from Univar USA, Kirkland, WA, USA.
Crystal® 3905 - PET homopolymer, IV = 0.616, available from E. I. du Pont de Nemours & Co., Inc., Wilmington, DE 19898, USA
Irganox® 1010 - antioxidant available from Ciba Specialty Chemicals, Tarrytown, NY, USA.
Manganese acetate (99%) - catalyst available from Aldrich Chemical Company, Milwaukee, WI, USA.
Loxiol® HOB 7119 - pentaerythritol tetrastearate used as a lubricant, available from Cognis Corporation, Cinncinati, OH 45232, USA
Pangel® B20 sepiolite - a very pure sepiolite that has been modified organically to increase compatibility with organic systems of low to medium polarity, available from EM Sullivan Associates, Inc., Paoli, PA 19301, USA, and made by Tolsa S.A. (Madrid 28001, Spain).
Pangel® S9 sepiolite - a very pure sepiolite, available from EM Sullivan Associates, Inc., Paoli, PA 19301, USA, and made by Tolsa S.A. (Madrid 28001, Spain).
Plasthalle® 809 - polyethylene glycol 400 di-2-ethylhexanoate, available from Ester Solutions, Bedford Park, IL 60499, USA.
Polymer D - ethylene/n-butyl acrylate/glycidyl methacrylate (66/22/12 wt. %) copolymer, melt, index 8 g/10 min.
Ultranox® 626 - an antioxidant, bis(2,4-di-t-butylphenyl)penterythritol diphosphite, available from GE Specialty Chemicals, Inc., Morgantown, WV 26501 USA.
Vansil® HR325 wollastonite fibers, average approximately 12:1 aspect ratio, 12 µm top size, median equivalent spherical diameter 2.3 µm, available from R. T. Vanderbilt Company, Inc., Norwalk, CT 06855, USA

In the Examples, all compositional amounts shown are parts by weight Test methods.

SEC A size exclusion chromatography system comprised of a Model Alliance 2690™ from Waters Corporation (Milford, MA, USA), with a Waters 410™ refractive index detector (DRI) and Viscotek Corporation (Houston, TX, USA) Model T-60A™ dual detector module incorporating static right angle light scattering and differential capillary viscometer detectors was used for molecular weight characterization. The mobile phase was 1,1,1,3,3,3-hexafluoro-2-propanol (HFIP) with 0.01 M sodium trifluoroacetate. The dn/dc was measured for the polymers and it was assumed that all of the sample was completely eluted during the measurement.

DEG The percentage of diethylene glycol (DEG) was determined using ¹H NMR spectroscopy.

Sag test A standard ASTM 20.3 cm (8") long, 0.32 cm (1/8") thick, tensile bar is clamped horizontally at one end in a cantilever fashion in a metal holder so that bar has a 15.2 cm (6") over hang from the clamp. The bar in the holder is heated in a 200°C for 30 min, and the distance (in mm) the end of the bar has sagged downward is measured after cooling to room temperature.

Instrumented Impact Test This test measured the force vs. time as a weighted 1.27 cm (½") diameter hemispherical tipped tup weighing 11.3 kg (25 pound) was dropped from 1.09 m through a 0.32 cm (⅛") thick molded plaque (here, a 10 cm (4") diameter disc). This gave a nominal tup speed of 4.5 m/sec when striking the plaque. The disc was clamped on the top and bottom surfaces, both sides of the clamp having colinear 3.81 cm (1.5") diameter holes, and the tup struck the disc in the center of these holes. An accelerometer was attached to the tup and the force during the impact was recorded digitally. The maximum force and total energy to break were calculated from the data. The data reported are the average of three determinations.

Tensile modulus, strength and elongation Measured using ASTM Method D256 at an extension rate of 5.08 cm (2") per minute.

Flexural modulus (three point) Measured using ASTM Method D790.

### Compounding and Molding Methods

Compounding Method Polymeric compositions were prepared by compounding in a 30 mm Werner and Pfleiderer twin screw extruder in 12-15 lb (5.5-6.8 kg) batches. PET and the polyester composition prepared in Example 1 were each dried overnight at 100-110°C in a dehumidified air drying oven. All ingredients were blended together and added to the rear barrel of the extruder, except that wollastonite was side-fed into barrel 5 (of 9 barrels for Examples 2-28 and Comparative Examples A-D, and of 10 barrels for Examples 29-31 and Comparative Example E, designating the rear feed barrel as barrel 1) and the plasticizer (Plasthall® 809) was fed into barrel 9 using a liquid injection pump. Any exceptions to this method are noted in the examples. Barrel temperatures were set at 280-310°C resulting in melt temperatures 290-350°C depending on the composition and extruder rate and rpm of the screw.

Melt Viscosity Determined using a Kayness Model 8052 viscometer, Kayness Corp., Morgantown PA, U.S.A., at 280°C and a shear rate of 1000/sec, with an orifice which was 1.52 cm (0.600") long and 0.0762 cm (0.030") in diameter. Holdup time was simply the amount of time which elapsed after the sample was added to the viscometer and before the measurement began, and was 6 minutes.

Molding Method. Resins were dried overnight at 110°C in a vacuum oven, then molded into ASTM test specimens on a 3 or 6 oz injection molding machine. Melt temperature were 280-300°C, mold temperatures were 110-130°C.

Thermal Stability Tests. Resin stability was tested by measuring melt viscosity loss of samples held in the viscometer at 295°C and by a hold up time (HUT) experiment using the 6 oz injection molding machine. The 15 min HUT test was accomplished by determining the standard cycle HUT (about 4 min) and then extending the cooling portion of the molding cycle to extend the cycle HUT time to 15 min. HUT is based on time in the barrel, and by extending the cooling portion, the screw is not turning any longer than in the normal cycle.

### EXAMPLE 1

### Polymer-Sepiolite Composition Preparation.

A stainless steel autoclave was charged with dimethyl terephthalate (111.1 lb, 50.5 kg), ethylene glycol (73.7 lb, 33.0 kg), antimony trioxide (30.8 g), manganese acetate (39.6 g), sodium acetate (14.3 g), and Pangel® B20 sepiolite (1540 g). The reaction vessel was purged with 60 psi of nitrogen three times. The vessel was heated to 240°C with a low flow nitrogen sweep of the vessel. While the vessel was heating to 240°C, the reaction was agitated at 25 rpm. After the vessel reached 240°C, the reaction temperature was maintained for 10 min. The reaction was then heated to 275°C and a 90 minute vacuum reduction cycle was begun. Upon completion of the vacuum reduction cycle, a full vacuum (0.1 torr) was applied to the reaction and the reaction was maintained at 275°C for 120 min. The reaction was pressurized with nitrogen and the polymer was extruded as a strand, quenched in water, and chopped into pellet form. The polymer molecular weight was determined using SEC. Mₙ = 24600, %DEG = 2.89%.

### EXAMPLES 2-28 and COMPARATIVE EXAMPLES A-D

The polymeric compositions described in Table 2 by ingredient parts by weight were prepared and tested as described above.

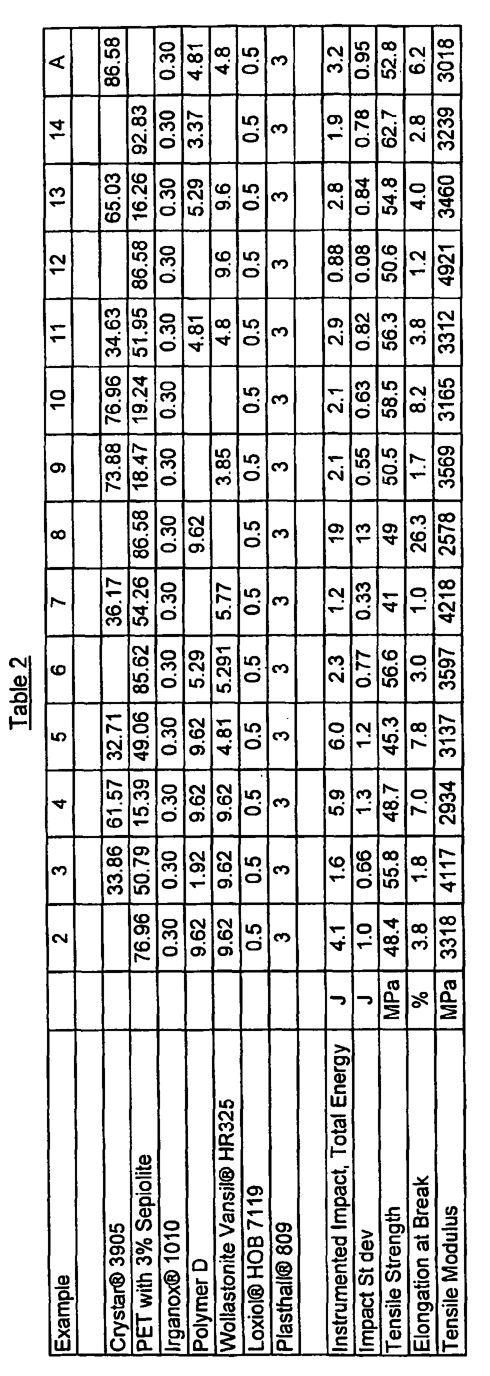

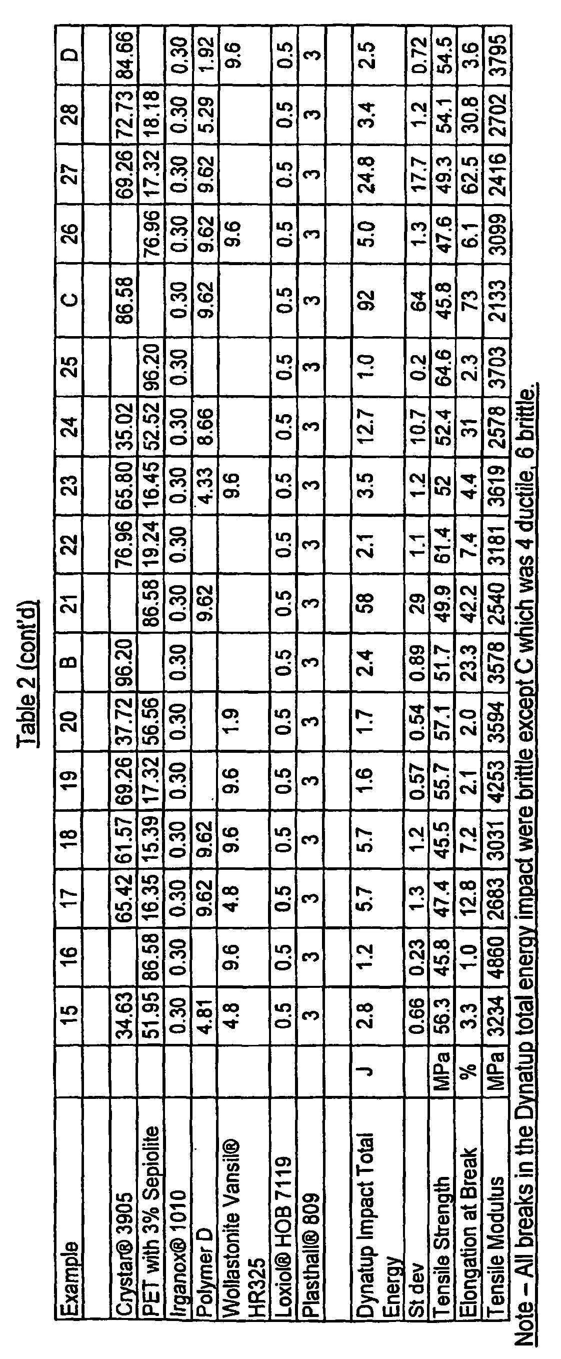

### EXAMPLES 29-31

The resin compositions in Table 3 below (ingredients in parts by weight) were compounded as described above using a 30 mm Wemer and Pfleiderer twin screw extruder Test bars and 10 cm (4") diameter discs (Impact), all 0.32 cm (⅛") thick, were molded and tested as described above. Results are presented in Table 3.

**Table 3.**

| Example | | 29 | 30 | 31 |
|---|---|---|---|---|
| | | | | |
| PET 3% Sepiolite Dried | | 96.2 | 86.2 | 76.2 |
| Ultranox® 626 | | 0.2 | 0.2 | 0.2 |
| Polymer D | | 0 | 5 | 10 |
| Loxiol® HOB 7119 | | 0.5 | 0.5 | 0.5 |
| Irganox® 1010 | | 0.1 | 0.1 | 0.1 |
| Wollastonite Vansil® HR325 | | 0.0 | 5.0 | 10.0 |
| Plasthall® 809 | | 3 | 3 | 3 |
| | | | | |
| Tensile Bar Sag @ 200°C, As Molded | mm | 33.95 | 28.47 | 31.85 |
| Flexural Modulus | MPa | 3558 | 3220 | 3068 |
| Flexural Modulus, 15 min HUT | MPa | 3613 | 3343.957 | 3041 |
| Tensile Strength | MPa | 75.6 | 61.3 | 51.7 |
| Elongation at break | % | 7.99 | 12.92 | 38.4 |
| Tensile Strength, 15 min HUT | MPa | 60.7 | 59.3 | 51.5 |
| Elongation at break, 15 min HUT | % | 2.35 | 4.7 | 7.87 |
| Instrumented Impact, Total Energy | J | 1.48 | 5.56 | 11.78 |
| Peak Force | lb | 129 | 358 | 542 |
| Instrumented Impact, 15 min HUT | J | 1.55 | 2.56 | 4.25 |
| Peak Force, 15 min HUT | lb | 114 | 198 | 261 |
| Melt Viscosity, 295°C | Pa-s | 45 | 118 | 271 |
| MV Loss @ 295°C, | %/min | 1.83% | 1.75% | 1.73% |

### COMPARATIVE EXAMPLE E

A resin containing 96 weight % PET, 1 wt%_Pangel® B20 sepiolite, and 3 wt% Plasthall® 809 was extruded as described above with the sepiolite side_fed and molded into tensile bars. Tensile Bar Sag at 200°C, was 72.73 mm as molded.

### EXAMPLE 32

Polyethylene terephthalate was produced in a four vessel continuous polymerization process system, consisting of a monomer reactor and three polymerization reactors in series. The monomer reactor (Ester Exchanger) was a cylindrical vertical vessel operated at 220°C. to 230°C. and atmospheric pressure which chemically reacts molten dimethyl terephthalate (DMT) and polymer grade ethylene glycol (EG) to create the polyester monomer. The Ester Exchanger consists of a cylindrical trayed distillation column 7.0 m high and 2.1 m in diameter sitting over an cylindrical base section which collects monomer from the trayed section of the reactor. DMT and EG were fed into the trayed section of the reactor. As the reaction progressed on the trays, the monomer that was formed moves down the reactor and the byproduct, methanol, moved up the column. The reaction was catalyzed by the addition of manganese [II] acetate tetrahydrate in solution in the EG. The final three vessels' purpose was to remove EG from the reaction mass to drive the polycondensation reaction and increase polymer molecular weight. This polymerization reaction was catalyzed by the addition of antimony oxide (Sb₂O₃) in solution in the EG added into the completed monomer stream. The first vessel in this polymerization series (Flasher) was an unstirred, 1.73 m³ vessel run at 255°C. and 8.5 kPa absolute pressure. The second vessel was a 4.56 m³ agitated vessel (Prepolymerizer) run at 288°C. and 1.2 kPa absolute pressure. The third vessel (Finisher) was a horizontal, cylindrical, 8.38 m³, reactor operated at 292°C and 350 Pa absolute pressure. The polymer in its final state was pumped from the 'finisher', extruded into strands, cooled until it solidified and then cut into pellets of a size where 95 to 100 pellets weighed 2.5 g.

Polymer molecular weight was primarily controlled by adjusting the pressure of the polymerization reactors. Polymer melt viscosity was measured at the exit of the finisher. This measurement is correlated to polymer molecular weight and used as a real time control point for adjusting finisher vacuum. Higher pressures increase the rate of molecular weight build. Lower pressures decrease that rate.

In this example, 907 kg/h of DMT and 454 kg/h of EG were fed into the trayed section of the Ester Exchanger. Additionally the EG stream contained 0.018 weight % solution of manganese acetate tetrahydrate. The monomer, bis(2- hydroxyethyl) terephthalate (BHET), was separated and taken off in the column bottoms. At any one time approximately 2180 kg of polyester intermediates or polyester were contained in the bottom section of the ester exchanger, 1630 kg were contained in the flasher, 1620 kg were contained in the prepolymerizer, and 1610 kg were contained in the finisher.

In a separate step 227 kg of Pangel® S9 sepiolite were added to 2270 kg of EG in a 3790 L tank and blended to a consistent slurry using an 20.3 cm diameter propeller style agitator. The resulting 9 weight % solids slurry was pumped to a holding tank using a centrifugal pump. Slurry from the holding tank was fed at a controlled rate to the continuous polymerization process at 303 kg/h using a gear pump into the bottom, open section of the Ester Exchanger. This resulted in a final product which was 3.0 weight % sepiolite in polyester.

In a separate step a 2.5 weight % solution of potassium acetate in ethylene glycol was added to the monomer in the transfer line between the Ester Exchanger and the Flasher. Other additives such as the polymerization catalyst, antimony oxide, were also injected into the monomer at this same location.

### EXAMPLE 33-34 AND COMPARATIVE EXAMPLES F-I

Samples were prepared from the composition made in Example 32, and from similar poly(ethylene terephthalate) whose polymerization did not include sepiolite. The compositions were made by melt mixing on a 30 mm Wemer & Pfleiderer twin screw extruder. All of the ingredients were rear fed and the screw configuration used was fairly severe so good mixing (high shear) was obtained. Extrusion conditions were 360 rpm, extrusion rate of 27 kg/h, barrel 2 was set to 180°C, barrel 3 was set to 250°C and barrels 4-13 were set to 300°C, and then materials were pelletized after exiting the extruder and cooling. Compositions and properties are given in Table 4. Test pieces were injection molded and various tests performed. These results are also shown in Table 4.

**Table 4**

| Example | 33 | F | G | 34 | H | I |
|---|---|---|---|---|---|---|
| | | | | | | |
| Composition of Example 32 | 96.2 | 0 | 0 | 86.2 | 0 | 0 |
| Polyester A^{a} | | 93.9 | 93.9 | | 83.9 | 83.9 |
| Pangel® S9, dried at 150°C | | 2.3 | | | 2.3 | |
| Pangel® S9, dried at 350°C | | | 2.3 | | | 2.3 |
| Polymer D | | | | 10 | 10 | 10 |
| Irganox® 1010 | 0.1 | 0.1 | 0.1 | 0.1 | 0.1 | 0.1 |
| Ultranox® 626 | 0.2 | 0.2 | 0.2 | 0.2 | 0.2 | 0.2 |
| Loxiol® HOB7119 | 0.5 | 0.5 | 0.5 | 0.5 | 0.5 | 0.5 |
| Plasthall® 809 | 3 | 3 | 3 | 3 | 3 | 3 |
| | | | | | | |
| Flex modulus, GPa | 3.57 | 3.24 | 3.25 | 2.68 | 2.27 | 2.31 |
| Tensile Strength, MPa | 73.0 | 57.6 | 61.5 | 54.4 | 47.0 | 46.4 |
| Elongation, % | 7.5 | 5.5 | 12.0 | 36.4 | 14.7 | 14.3 |
| Instrumented Impact, J | 2.28 | 1.12 | 1.59 | 71.2 | 4.34 | 5.90 |
| Instrumented Impact, J, STD DEV | 0.54 | 0.45 | 0.56 | 4.59 | 0.88 | 1.10 |
| Peak Force, kg | 61 | 38 | 42 | 492 | 134 | 141 |
| Melt Viscosity, Pa sec, 280°C | 57 | 33 | 58 | 207 | 161 | 199 |

| | | | | | | |
|---|---|---|---|---|---|---|
| ^{a} Made by similar process as in Example 33, but with no sepiolite present. | | | | | | |

The melt viscosities show that the compositions contain polyesters of similar molecular weights, although Comparative Examples G and I may have suffered some hydrolysis in the melt blending. The properties of the composition of Example 34 show good stiffness (flexural modulus) and tensile strength while still having superior toughness. The combination of high stiffness and toughness is often difficult to achieve, whether the composition is toughened (Polymer D) or not.

## Claims

1. A composition, comprising:
(a) at least 40 weight percent, based on the total of all ingredients in the composition, of at least one polyester with a melting point of 100°C or higher;
(b) 0.1 to 20 weight percent of sepiolite-type clay, based on the weight of polyester plus sepiolite-type clay;
(c) 0 to 35 weight percent, based on the total.of all ingredients in the composition, of a reinforcing agent, exclusive of the sepiolite-type clay, with an average aspect ratio of 2.0 or more, and whose average longest dimension is 20 µm or less; and
(d) 1 to 30 weight percent, based on the total of all ingredients in the composition, of a polymeric toughening agent which contains functional groups reactive with said polyester; and
provided that a mixture of said polyester and said sepiolite-type clay is prepared by a process comprising mixing a sepiolite-type clay with at least one polyester precursor selected from the group consisting of
(i) at least one diacid or diester and at least one diol;
(ii) at least one polymerizable polyester monomer;
(iii) at least one linear polyester oligomer, and
(iv) at least one macrocyclic polyester oligomer,
and subsequently polymerizing said at least one polyester precursor in the presence or absence of solvent.

2. The composition as recited in claim 1 wherein said polyester consists essentially of repeat units derived from one or more of terephthalic acid, isophthalic acid and 2,6-naphthalene dicarboxylic acid, and one or more of HO(CH₂)ₙOH , 1,4-cyclohexanedimethanol, HO(CH₂CH₂O)ₘCH₂CH₂OH, and HO(CH₂CH₂CH₂CH₂O)₂CH₂CH₂CH₂CH₂OH (III), wherein n is an integer of 2 to 10, m on average is 1 to 4, and z is an average of 7 to 40.

3. The composition as recited in claim 1 or 2 wherein said reinforcing agent is 5 to 20 weight percent of said composition.

4. The composition as recited in any one of claims 1 to 3 wherein said polymeric toughening agent contains epoxy or carboxylic anhydride functional groups.

5. The composition as recited in any one of claims 1 to 4 wherein said composition contains 5 to 25 weight percent of said polymeric toughener.

6. The composition as recited in claim 1 wherein said polyester is poly(ethylene terephthalate); said reinforcing agent has an aspect ratio of 3.0 or more, an average maximum dimension of 10 µm or less, and is 5 to 20 weight percent of said composition; said polymeric toughening agent contains epoxy functional groups, contains 7 to 13 weight percent of one or more epoxy group containing monomers, and is 10 to 20 weight percent of said composition.

7. An article of manufacture comprising the composition of any one of claims 1 to 6.

8. The article of claim 7 wherein said article is an appearance part.

9. The appearance part as recited in claim 8 which is pigmented and/or coated.

10. An automobile, truck, snowmobile, construction vehicle, or farm equipment vehicle, comprising the composition of any one of claims 1 to 6.

11. A process for making a composition, said composition comprising:
(a) at least 40 weight percent, based on the total of all ingredients in the composition, of at least one polyester with a melting point of 100°C or higher;
(b) 0.1 to 20 weight percent of sepiolite-type clay, based on the weight of polyester plus sepiolite-type clay;
(c) 0 to 35 weight percent, based on the total of all ingredients in the composition, of a reinforcing agent, exclusive of the sepiolite-type clay, witch an average aspect ratio of 2.0 or more, and whose average longest dimension is 20 µm or less; and
(d) 1 to 30 weight percent, based on the total of all ingredients in the composition, of a polymeric toughening agent which contains functional groups reactive with said polyester;
wherein said composition additionally comprises at least one or more active ingredients and optionally one or more inactive ingredients, said process comprising the steps:
A). in a first mixing step, mixing materials comprising said polyester containing said exfoliated sepiolite-type clay, said polymeric toughening agent, and optionally said polyester, to form an intermediate composition; and then
B). in one or more subsequent mixing steps, mixing materials comprising said intermediate composition, and said one or more active ingredients; and provided that each of said one or more inactive ingredients is initially mixed in said first mixing step, or one or more of said subsequent mixing steps;
and further provided hat a mixture of said polyester and said sepiolite-type clay is prepared by a process comprising mixing a sepiolite-type clay with at least one polyester precursor selected from the group consisting of
(i) at least one diacid or diester and at least one diol;
(ii) at least one polymerizable polyester monomer;
(iii) at least one linear polyester oligomer, and
(iv) at least one macrocyclic polyester oligomer,
and subsequently polymerizing said at least one polyester precursor in the presence or absence of solvent.

12. The process as recited in claim 11 wherein said polyester consists essentially of repeat units derived from one or more of terephthalic acid, isophthalic acid and 2,6-naphthalene dicarboxylic acid, and one or more of HO(CH₂)ₙOH (I), 1,4-cyclohexanedimethanol, HO(CH₂CH₂O)ₘCH₂CH₂OH, and HO(CH₂CH₂CH₂CH₂O)_{z}CH₂CH₂CH₂CH₂OH, wherein n is an integer of 2 to 10, m on average is 1 to 4, and z is an average of 7 to 40.

13. The process as recited in claim 11 or 12 wherein said polymeric toughening agent contains epoxy functional groups.

14. The process as recited in claim 11 wherein said polyester is poly(ethylene terephthalate); said reinforcing agent has an aspect ratio of 3.0 or more, an average maximum dimension of 10 µm or less, and is 5 to 20 weight percent of said composition; said polymeric toughening agent contains epoxy functional groups, contains 7 to 13 weight percent of one or more epoxy group containing monomers, and is 10 to 20 weight percent of said composition.

15. A process for coating substrates assembled from metal parts and at least one plastic part, with visible plastic surfaces, comprising the successive steps of:
(1) electrodeposition coating the substrates, removing non-deposited electrodeposition coating agent from the substrate and thermally cross-linking the deposited electrodeposition coating and thereby forming an electrodeposition coating primer on the metal surfaces; and
(2) application and curing of at least one additional coating at least on all the visible metal and plastic surfaces;
provided that at least some of the plastic parts make up the visible plastic surfaces of the substrate, and at least some of the plastic parts have a composition which comprises:
(a) at least 40 weight percent, based on the total of all ingredients in the composition, of at least one polyester with a melting point of about 100°C or higher;
(b) 0.1 to 20 weight percent of sepiolite-type clay, based on the weight of polyester plus sepiolite-type clay;
(c) 0 to 35 weight percent, based on the total of all ingredients in the composition, of a reinforcing agent, exclusive of the sepiolite-type clay, with an average aspect ratio of 2.0 or more, and whose average longest dimension is 20 µm or less; and
(d) 1 to 30 weight percent, based on the total of all ingredients in the composition, of a polymeric toughening agent which contains functional groups reactive with said polyester;
wherein said composition additionally comprises at least one or more active ingredients and optionally one or more inactive ingredients,
and provided that a mixture of said polyester and said sepiolite-type clay is prepared by a process comprising mixing a sepiolite-type clay with at least one polyester precursor selected from the group consisting of
(i) at least one diacid or diester and at least one diol;
(ii) at least one polymerizable polyester monomer;
(iii) at least one linear polyester oligomer, and
(iv) at least one macrocyclic polyester oligomer,
and subsequently polymerizing said at least one polyester precursor in the presence or absence of solvent.

16. The process as recited in claim 15 wherein said polyester consists essentially of repeat units derived from one or more of terephthalic acid, isophthalic acid and 2,6-naphthalene dicarboxylic acid, and one or more of HO(CH₂)ₙOH (I), 1,4-cyclohexanedimethanol, HO(CH₂CH₂O)ₘCH₂CH₂OH, and HO(CH₂CH₂CH₂CH₂O)_{z}CH₂CH₂CH₂CH₂OH, wherein n is an integer of 2 to 10, m on average is 1 to 4, and z is an average of 7 to 40.

17. The process of any one of claims 14 to 16, wherein the substrates are car bodies.

18. Coated substrates which are coated according to the process of claim 15 or 16.

19. A vehicle manufactured according to a method which comprises the process of claims 15 or 16.

## Patentansprüche

1. Zusammensetzung umfassend:
(a) mindestens 40 Gewichtsprozent, auf alle Bestandteile der Zusammensetzung insgesamt bezogen, mindestens eines Polyesters mit einem Schmelzpunkt von 100 °C oder höher;
(b) 0,1 bis 20 Gewichtsprozent Ton vom Sepiolittyp, auf das Gewicht von Polyester plus Ton vom Sepiolittyp bezogen;
(c) 0 bis 35 Gewichtsprozent, auf alle Bestandteile der Zusammensetzung insgesamt bezogen, eines Verstärkungsmittels ausschließlich des Tons vom Sepiolittyp, mit einem durchschnittlichen Seitenverhältnis von 2,0 oder mehr, dessen durchschnittliche längste Dimension 20 µm oder weniger beträgt; und
(d) 1 bis 30 Gewichtsprozent, auf alle Bestandteile der Zusammensetzung insgesamt bezogen, eines polymeren Schlagzähmodifiziermittels, das funktionelle Gruppen enthält, die mit dem Polyester reaktiv sind; und
vorausgesetzt, dass eine Mischung des Polyesters und des Tons vom Sepiolittyp durch ein Verfahren hergestellt wird umfassend das Mischen eines Tons vom Sepiolittyp mit mindestens einem Polyestervorläufer ausgewählt aus der Gruppe bestehend aus
(i) mindestens einer zweibasigen Säure oder einem Ester und mindestens einem Diol;
(ii) mindestens einem polymerisierbaren Polyestermonomer;
(iii) mindestens einem linearen Polyesteroligomer und
(iv) mindestens einem makrocyclischen Polyesteroligomer
und daraufhin das Polymerisieren des mindestens einen Polyestervorläufers in Gegenwart oder Abwesenheit eines Lösungsmittels.

2. Zusammensetzung, wie in Anspruch 1 angegeben, wobei der Polyester im Wesentlichen aus Wiederholungseinheiten besteht, die von einer oder mehreren von Terepthalsäure, Isophthalsäure und 2,6-Napthahlendicarbonsäure und einem oder mehreren von HO(CH₂)ₙOH; 1,4-Cyclohexandimethanol, HO(CH₂CH₂O)ₘCH₂CH₂OH und HO(CH₂CH₂CH₂CH₂O)_{z}CH₂CH₂CH₂CH₂OH(III) derivatisiert sind, wobei n eine ganze Zahl von 2 bis 10 ist, m im Durchschnitt 1 bis 4 beträgt und z im Durchschnitt 7 bis 40 beträgt.

3. Zusammensetzung, wie in Anspruch 1 oder 2 angegeben, wobei das Verstärkungsmittel 5 bis 20 Gewichtsprozent, auf die Zusammensetzung bezogen, beträgt.

4. Zusammensetzung, wie in einem der Ansprüche 1 bis 3 angegeben, wobei das polymere Schlagzähmodifiziermittel epoxy- oder carbonsäureahydridfunktionelle Gruppen enthält.

5. Zusammensetzung, wie in einem der Ansprüche 1 bis 4 angegeben, wobei die Zusammensetzung 5 bis 25 Gewichtsprozent des polymeren Schlagzähmodifizierers enthält.

6. Zusammensetzung, wie in Anspruch 1 angegeben, wobei der Polyester Poly(ethylenterephthalat) ist; das Verstärkungsmittel ein Seitenverhältnis von 3,0 oder mehr, eine durchschnittliche Maximaldimension von 10 µm oder weniger aufweist und 5 bis 20 Gewichtsprozent, auf die Zusammensetzung bezogen, ausmacht; wobei das polymere Schlagzähmodifiziermittel epoxyfunktionelle Gruppen enthält, 7 bis 13 Gewichtsprozent eines oder mehrerer Epoxygruppen enthaltender Monomere enthält und 10 bis 20 Gewichtsprozent der Zusammensetzung ausmacht.

7. Herstellungsgegenstand umfassend die Zusammensetzung nach einem der Ansprüche 1 bis 6.

8. Gegenstand nach Anspruch 7, wobei der Gegenstand ein das Aussehen bestimmender Teil ist.

9. Das Aussehen bestimmender Teil, wie in Anspruch 8 angegeben, der pigmentiert und/oder beschichtet ist.

10. Fahrzeug, Lastwagen, Schneemobil, Baufahrzeug oder landwirtschaftliches Gerätefahrzeug umfassend die Zusammensetzung nach einem der Ansprüche 1 bis 6.

11. Verfahren zum Herstellen einer Zusammensetzung, wobei die Zusammensetzung Folgendes umfasst:
(a) mindestens 40 Gewichtsprozent, auf alle Bestandteile der Zusammensetzung insgesamt bezogen, mindestens eines Polyesters mit einem Schmelzpunkt von 100 °C oder höher;
(b) 0,1 bis 20 Gewichtsprozent Ton vom Sepiolittyp, auf das Gewicht von Polyester plus Ton vom Sepiolittyp bezogen;
(c) 0 bis 35 Gewichtsprozent, auf alle Bestandteile der Zusammensetzung insgesamt bezogen, eines Verstärkungsmittels ausschließlich des Tons vom Sepiolittyp, mit einem durchschnittlichen Seitenverhältnis von 2,0 oder mehr, dessen durchschnittliche längste Dimension 20 µm oder weniger beträgt; und
(d) 1 bis 30 Gewichtsprozent, auf alle Bestandteile der Zusammensetzung insgesamt bezogen, eines polymeren Schlagzähmodifiziermittels, das funktionelle Gruppen enthält, die mit dem Polyester reaktiv sind;
wobei die Zusammensetzung des Weiteren mindestens einen oder mehrere aktive(n) Bestandteil(e) und wahlweise einen oder mehrere inaktive(n) Bestandteil(e) umfasst, wobei das Verfahren folgende Schritte umfasst:
A) in einem ersten Mischschritt das Mischen von Materialien umfassend den Polyester enthaltend den abgeblätterten Ton von Sepiolittyp, wobei das Schlagzähmodifiziermittel und wahlweise der Polyester eine Zwischenzusammensetzung bilden; und daraufhin
B) in einem oder mehreren darauffolgenden Mischschritt(en) das Mischen von Materialien umfassend die Zwischenzusammensetzung und den einen oder die mehreren aktiven Bestandteile;
und vorausgesetzt, dass jedes des einen inaktiven Bestandteils oder der mehrerer inaktiven Bestandteile anfänglich in dem ersten Mischschritt oder einem oder mehreren darauffolgenden Mischschritten gemischt wird/werden,
und des Weiteren vorausgesetzt, dass eine Mischung des Polyesters und des Tons vom Sepiolittyp durch ein Verfahren hergestellt wird, umfassend das Mischen eines Tons vom Sepiolittyp mit mindestens einem Polyestervorläufer ausgewählt aus der Gruppe bestehend aus
(i) mindestens einer zweibasigen Säure oder einem Diester und mindestens einem Diol;
(ii) mindestens einem polymerisierbaren Polyestermonomer;
(iii) mindestens einem linearen Polyesteroligomer und
(iv) mindestens einem makrocyclischen Polyesteroligomer
und daraufhin das Polymerisieren des mindestens einen Polyestervorläufers in Gegenwart oder Abwesenheit eines Lösungsmittels.

12. Verfahren, wie in Anspruch 11 angegeben, wobei der Polyester im Wesentlichen aus Wiederholungseinheiten besteht, die von einer oder mehreren von Terepthalsäure, Isophthalsäure und 2,6-Napthahlendicarbonsäure und einem oder mehreren von HO(CH₂)ₙOH (I), 1,4-Cyclohexandimethanol, HO(CH₂CH₂O)ₘCH₂CH₂OH und HO(CH₂CH₂CH₂CH₂O)₂CH₂CH₂CH₂CH₂OH derivatisiert sind, wobei n eine ganze Zahl von 2 bis 10 ist, m im Durchschnitt 1 bis 4 beträgt und z im Durchschnitt 7 bis 40 beträgt.

13. Verfahren, wie in Anspruch 11 oder 12 angegeben, wobei das polymere Schlagzähmodifiziermittel epoxyfunktionelle Gruppen enthält.

14. Verfahren, wie in Anspruch 11 angegeben, wobei der Polyester Poly(ethylenterephthalat) ist; das Verstärkungsmittel ein Seitenverhältnis von 3,0 oder mehr, eine durchschnittliche Maximaldimension von 10 µm oder weniger aufweist und 5 bis 20 Gewichtsprozent, auf die Zusammensetzung bezogen, ausmacht; wobei das polymere Schlagzähmmodifiziermittel epoxyfunktionelle Gruppen enthält, 7 bis 13 Gewichtsprozent eines oder mehrerer Epoxygruppen enthaltender Monomere enthält und 10 bis 20 Gewichtsprozent der Zusammensetzung ausmacht.

15. Verfahren zum Beschichten von Substraten, die aus Metallteilen und mindestens einem Kunststoffteil mit sichtbaren Kunststoffoberflächen zusammengebaut sind umfassend die folgenden aufeinanderfolgenden Schritte:
(1) Eletrotauchlackieren der Substrate, Entfernen von nichtabgesetztem Elektrotauchlackierungsmittel von dem Substrat und thermisches Vernetzen der abgesetzten Elektrotauchlackierung und **dadurch** Bilden einer Elektrotauchlackierungsgrundierung auf den Metalloberflächen; und
(2) Aufbringen und Aushärten von mindestens einer zusätzlichen Beschichtung auf mindestens allen sichtbaren Metall- und Kunststoffflächen;
vorausgesetzt, dass mindestens einige der Kunststoffteile die sichtbaren Kunststoffflächen des Substrats darstellen und mindestens einige der Kunststoffteile eine Zusammensetzung aufweisen, die Folgendes umfasst:
(a) mindestens 40 Gewichtsprozent, auf alle Bestandteile der Zusammensetzung insgesamt bezogen, mindestens eines Polyesters mit einem Schmelzpunkt von 100 °C oder höher;
(b) 0,1 bis 20 Gewichtsprozent Ton vom Sepiolittyp, auf das Gewicht von Polyester plus Ton vom Sepiolittyp bezogen;
(c) 0 bis 35 Gewichtsprozent, auf alle Bestandteile der Zusammensetzung insgesamt bezogen, eines Verstärkungsmittels ausschließlich des Tons vom Sepiolittyp, mit einem durchschnittlichen Seitenverhältnis von 2,0 oder mehr, dessen durchschnittliche längste Dimension 20 µm oder weniger beträgt; und
(d) 1 bis 30 Gewichtsprozent, auf alle Bestandteile der Zusammensetzung insgesamt bezogen, eines polymeren Schlagzähmodifiziermittels, das funktionelle Gruppen enthält, die mit dem Polyester reaktiv sind;
wobei die Zusammensetzung zusätzlich mindestens einen oder mehrere aktive Bestandteile und wahlweise einen oder mehrere inaktive Bestandteile umfasst,
und vorausgesetzt, dass eine Mischung des Polyesters und des Tons vom Sepiolittyp durch ein Verfahren hergestellt wird umfassend das Mischen eines Tons vom Sepiolittyp mit mindestens einem Polyestervorläufer ausgewählt aus der Gruppe bestehend aus
(i) mindestens einer zweibasigen Säure oder einem Ester und mindestens einem Diol;
(ii) mindestens einem polymerisierbaren Polyestermonomer;
(iii) mindestens einem linearen Polyesteroligomer und
(iv) mindestens einem makrocyclischen Polyesteroligomer
und daraufhin das Polymerisieren des mindestens einen Polyestervorläufers in Gegenwart oder Abwesenheit eines Lösungsmittels.

16. Verfahren, wie in Anspruch 15 angegeben, wobei der Polyester im Wesentlichen aus Wiederholungseinheiten besteht, die von einer oder mehreren von Terepthalsäure, Isophthalsäure und 2,6-Napthahlendicarbonsäure und einem oder mehreren von HO(CH₂)ₙOH (I), 1,4-Cyclohexandimethanol, HO(CH₂CH₂O)ₘCH₂CH₂OH und HO(CH₂CH₂CH₂CH₂O)_{z}CH₂CH₂CH₂CH₂OH derivatisiert sind, wobei n eine ganze Zahl von 2 bis 10 ist, m im Durchschnitt 1 bis 4 beträgt und z im Durchschnitt 7 bis 40 beträgt.

17. Verfahren nach einem der Ansprüche 14 bis 16, wobei die Substrate Autokarosserien sind.

18. Beschichtete Substrats, die nach einem der Ansprüche 15 oder 16 beschichtet sind.

19. Fahrzeug, nach einem Verfahren hergestellt, das das Verfahren nach den Ansprüchen 15 oder 16 umfasst.

## Revendications

1. Composition, comprenant :
(a) au moins 40 pour cent en poids, basé sur le total de tous les ingrédients dans la composition, d'au moins un polyester avec un point de fusion de 100°C ou supérieur,
(b) 0,1 à 20 pour cent en poids d'argile de type sépiolite, basé sur le poids du polyester plus de l'argile de type sépiolite;
(c) 0 à 35 pour cent en poids, basé sur le total de tous les ingrédients dans la composition, d'un agent de renforcement, à l'exclusion de l'argile de type sépiolite, avec un rapport moyen de forme de 2,0 ou plus, et dont la dimension moyenne la plus longue est 20 µm ou moins ; et
(d) 1 à 30 pour cent en poids, basé sur le total de tous les ingrédients dans la composition, d'un agent polymère de renforcement qui contient des groupes fonctionnels réactifs avec ledit polyester ; et
à condition qu'un mélange dudit polyester et de ladite argile de type sépiolite soit préparé par un procédé comprenant le mélange d'une argile de type sépiolite avec au moins un précurseur de polyester choisi parmi le groupe constitué de
(i) au moins un diacide ou diester et au moins un diol ;
(ii) au moins un monomère de polyester polymérisable ;
(iii) au moins un oligomère de polyester linéaire, et
(iv) au moins un oligomère de polyester macrocyclique,
et par la suite la polymérisation dudit au moins un précurseur de polyester en présence ou en l'absence de solvant.

2. Composition telle qu'énoncée dans la revendication 1, dans laquelle ledit polyester consiste essentiellement en motifs de répétition dérivés d'un ou plusieurs parmi l'acide téréphtalique, l'acide isophtalique et l'acide 2,6-naphtalène dicarboxylique, et un ou plusieurs parmi HO(CH₂)ₙOH, 1,4-cyclohexanediméthanol, HO(CH₂CH₂O)ₘCH₂CH₂OH, et HO(CH₂CH₂CH₂CH₂O)₂CH₂CH₂CH₂CH₂OH (III), dans lesquelles n est un nombre entier de 2 à 10, m en moyenne-prend la valeur de 1 à 4, et z est en moyenne de 7 à 40.

3. Composition telle qu'énoncée selon la revendication 1 ou 2, dans laquelle ledit agent de renforcement est de 5 à 20 pour cent en poids de ladite composition.

4. Composition telle qu'énoncée selon l'une quelconque des revendications 1 à 3, dans laquelle ledit agent polymère de renforcement contient des groupes fonctionnels époxy ou d'anhydride carboxylique.

5. Composition telle qu'énoncée selon l'une quelconque des revendications 1 à 4, dans laquelle ladite composition contient 5 à 25 pour cent en poids dudit agent de renforcement polymère.

6. Composition telle qu'énoncée selon la revendication 1, dans laquelle ledit polyester est le poly(téréphtalate d'éthylène) ; ledit agent de renforcement a un rapport de forme de 3,0 ou plus, une dimension maximale moyenne de 10 µm ou moins, et est de 5 à 20 pour cent en poids de ladite composition ; ledit agent polymère de renforcement contient des groupes fonctionnels époxy, contient 7 à 13 pour cent en poids d'un ou plusieurs monomère(s) contenant un groupe époxy, et est de 10 à 20 pour cent en poids de ladite composition.

7. Article de manufacture comprenant la composition selon l'une quelconque des revendications 1 à 6.

8. Article selon la revendication 7, dans lequel ledit article est une pièce d'esthétique.

9. Pièce d'esthétique telle qu'énoncée selon la revendication 8, qui est pigmentée et/ou revêtue.

10. Automobile, camion, véhicule pour neige, véhicule de construction, ou véhicule d'équipement d'exploitation agricole, comprenant la composition selon l'une quelconque des revendications 1 à 6.

11. Procédé de fabrication d'une composition, ladite composition comprenant :
(a) au moins 40 pour cent en poids, basés sur le total de tous les ingrédients dans la composition, d'au moins un polyester avec un point de fusion de 100°C ou supérieur ;
(b) 0,1 à 20 pour cent en poids d'argile de type sépiolite, basé(s) sur le poids du polyester plus l'argile de type sépiolite ;
(c) 0 à 35 pour cent en poids, basé(s) sur le total de tous les ingrédients dans la composition, d'un agent de renforcement, à l'exclusion de l'argile de type sépiolite, avec un rapport moyen de forme de 2,0 ou plus, et dont la dimension moyenne la plus longue est de 20 µm ou moins ; et
(d) 1 à 30 pour cent en poids, basé(s) sur le total de tous les ingrédients dans la composition, d'un agent polymère de renforcement qui contient les groupes fonctionnels réactifs avec ledit polyester ;
dans laquelle ladite composition comprend de manière supplémentaire au moins un ou plusieurs ingrédient(s) actif(s) et éventuellement un ou plusieurs ingrédient(s) inactif(s), ledit procédé comprenant les étapes :
A) dans une première étape de mélange, le mélange des matériaux comprenant ledit polyester contenant ladite argile exfoliée de type sépiolite, ledit agent polymère de renforcement, et éventuellement ledit polyester, pour former une composition intermédiaire ; et ensuite
B) en une ou plusieurs étape(s) ultérieure(s) de mélange, le mélange des matériaux comprenant ladite composition intermédiaire, et ledit un ou plusieurs ingrédient(s) actif(s) ;
et à condition que chacun dudit (desdits) un ou plusieurs ingrédient(s) inactif(s) soit initialement mélangé dans ladite première étape de mélange, ou une ou plusieurs desdites étapes ultérieures de mélange ;
et à condition en outre qu'un mélange dudit polyester et de ladite argile de type sépiolite soit préparé par un procédé comprenant le mélange d'une argile de type sépiolite avec au moins un précurseur de polyester choisi parmi le groupe constitué de
(i) au moins un diacide ou diester et au moins un diol ;
(ii) au moins un monomère de polyester polymérisable ;
(iii) au moins un oligomère de polyester linéaire, et
(iv) au moins un oligomère de polyester macrocyclique,
et par la suite la polymérisation dudit au moins un précurseur de polyester en présence ou en l'absence de solvant.

12. Procédé tel qu'énoncé selon la revendication 11, dans lequel ledit polyester consiste essentiellement en motifs de répétition dérivés d'un ou plusieurs parmi l'acide téréphtalique, l'acide isophtalique et l'acide 2,6-naphtalène dicarboxylique, et un ou plusieurs parmi HO(CH₂)ₙOH(I), 1,4-cyclohexanediméthanol, HO(CH₂CH₂O)ₘCH₂CH₂OH, et HO(CH₂CH₂CH₂CH₂O)_{z}CH₂CH₂CH₂CH₂OH, dans lequel n est un nombre entier prenant une valeur allant de 2 à 10, m en moyenne prend la valeur de 1 à 4, et z est en moyenne de 7 à 40.

13. Procédé tel qu'énoncé selon la revendication 11 ou 12, dans lequel ledit agent de renforcement polymère contient des groupes fonctionnels époxy.

14. Procédé tel qu'énoncé selon la revendication 11, dans lequel ledit polyester est le poly(téréphtalate d'éthylène) ; ledit agent de renforcement a un rapport de forme de 3,0 ou plus, une dimension maximale moyenne de 10 µm au moins, et est de 5 à 20 pour-cent en poids de ladite composition, ledit agent polymère de renforcement contient des groupes fonctionnels époxy, contient 7 à 13 % en poids d'un ou plusieurs monomère(s) contenant un groupe époxy, et est de 10 à 20% en poids de ladite composition.

15. Procédé de revêtement de substrats assemblés à partir de pièces métalliques et d'au moins une pièce en matière plastique, avec des surfaces visibles en matière plastique, comprenant les étapes successives de :
(1) revêtement par électrodéposition des substrats, élimination de l'agent de revêtement par électrodéposition non déposé du substrat et réticulation de manière thermique du revêtement d'électrodéposition déposé et formation par ce biais d'un apprêt de revêtement par électrodéposition sur les surfaces métalliques ; et
(2) application et durcissement d'au moins un revêtement supplémentaire au moins sur toutes les surfaces visibles en métal et en matière plastique ;
à condition qu'au moins une partie des pièces en matière plastique rende visible les surfaces en matière plastique du substrat, et qu'au moins une partie des pièces en matière plastique ait une composition qui comprend :
(a) au moins 40 pour cent en poids, basés sur le total de tous les ingrédients dans la composition, d'au moins un polyester avec un point de fusion d'environ 100°C ou supérieur ;
(b) 0,1 à 20 % en poids d'argile de type sépiolite, basé(s) sur le poids du polyester plus de l'argile de type sépiolite ;
(c) 0 à 35 pour cent en poids, basé(s) sur le total de tous les ingrédients dans la composition, d'un agent de renforcement, à l'exclusion de l'argile de type sépiolite, avec un rapport moyen de forme de 2,0 ou plus, et dont la dimension moyenne la plus longue est de 20 µm ou moins ; et
(d) 1 à 30 pour cent en poids, basé(s) sur le total de tous les ingrédients dans la composition, d'un agent polymère de renforcement qui contient des groupes fonctionnels réactifs avec ledit polyester ;
dans laquelle ladite composition comprend de manière supplémentaire au moins un ou plusieurs ingrédient(s) actif(s) et éventuellement un ou plusieurs ingrédient(s) inactif(s),
et à condition qu'un mélange dudit polyester et de ladite argile de type sépiolite soit préparé par un procédé comprenant le mélange d'une argile de type sépiolite avec au moins un précurseur de polyester choisi parmi le groupe constitué de
(i) au moins un diacide ou un diester et au moins un diol ;
(ii) au moins un monomère de polyester polymérisable ;
(iii) au moins un oligomère de polyester linéaire, et
(iv) au moins un oligomère de polyester macrocyclique,
et par la suite la polymérisation dudit au moins un précurseur de polyester en présence ou en l'absence de solvant.

16. Procédé tel qu'énoncé selon la revendication 15, dans lequel ledit polyester consiste essentiellement en motifs de répétition dérivés d'un ou plusieurs parmi l'acide téréphtalique, l'acide isophtalique et l'acide 2,6-naphtalène dicarboxylique, et un ou plusieurs parmi le HO(CH₂)ₙOH (I), 1,4-cyclohexanediméthanol, HO(CH₂CH₂O)ₘCH₂CH₂OH, et HO(CH₂CH₂CH₂CH₂O)_{z}CH₂CH₂CH₂CH₂OH dans lesquels n est un nombre entier prenant une valeur allant de 2 à 10, m en moyenne prend la valeur de 1 à 4, et z est une moyenne de 7 à 40.

17. Procédé selon l'une quelconque des revendications 14 à 16, dans lequel les substrats sont des carrosseries d'automobile.

18. Substrats revêtus qui sont revêtus selon le procédé selon la revendication 1 ou 16.

19. Article fabriqué selon un procédé qui comprend le procédé selon les revendications 15 ou 16.
